# EUROPÄISCHE PATENTANMELDUNG

(11) **EP 4 566 778 A2**
(43) Veröffentlichungstag der Anmeldung: **11.06.2025**
(21) Anmeldenummer: 25159440.4
(22) Anmeldetag: 12.04.2023
(51) Int. Cl.: B26D 3/00

(54) **REIFENNACHSCHNEIDEMASCHINE UND VERFAHREN ZUM NACHSCHNEIDEN EINES PROFILS**

(30) Priorität: 22.04.2022 DE 102022109812
(62) Teilanmeldung aus: 23167638.8
(71) Anmelder: Bear-Machines GmbH, 48619 Heek (DE)
(72) Erfinder: Berendsen, Mark, 48683 Ahaus-Wessum (DE)
(74) Vertreter: Beckord & Niedlich Patentanwälte PartG mbB

(57) **Zusammenfassung**

Die Erfindung betrifft eine Reifennachschneidemaschine (1, 1*) zum Nachschneiden eines Profils (P) mit zumindest einer Rille (R₁, R₂, R₃, R₄, R₅) in einer Lauffläche (T) eines Reifens (W), mit einer Reifenaufnahme (10, 10*) zum Halten eines Reifens (W) auf einer Antriebsachse (A), welche koaxial zu einer Rotationsachse (A) des Reifens (W) verläuft. Weiter umfasst die Reifennachschneidemaschine (1, 1*) Antriebsmittel (11), um einen von der Reifenaufnahme (10, 10*) aufgenommenen Reifen (W) während eines Schneidvorgangs um die Rotationsachse (A) zu rotieren sowie eine Schneidvorrichtung (20, 20*), welche einen Schneidkopf (30, 30*) mit einem Messer (31, 31*) und eine Abstützvorrichtung (35, 35*), um den Schneidkopf (30, 30*) während eines Schneidvorgangs an der Lauffläche (T) des von der Reifenaufnahme (10, 10*) aufgenommenen Reifens (W) abzustützen, so dass sich das Messer (31, 31*) in der Rille (R₁, R₂, R₃, R₄, R₅) der Lauffläche (T) befindet, aufweist. Ferner umfasst die Reifennachschneidemaschine (1, 1*) eine Steuervorrichtung (9, 9*), welche die Reifennachschneidemaschine (1, 1*) so steuert, dass das Profil (P) des Reifens (W) entlang der Rille (R₁, R₂, R₃, R₄, R₅) nachgeschnitten wird.

## Beschreibung

Die Erfindung betrifft eine Reifennachschneidemaschine und ein Verfahren zum Nachschneiden eines Profils mit zumindest einer Rille in einer Lauffläche eines Reifens.

Grundsätzlich kann das Profil eines neuen Reifens aus Stabilitätsgründen nicht beliebig tief ausgebildet werden, so dass, wenn dieses einmal bis zur gesetzlich vorgeschriebenen Minimalprofiltiefe abgefahren ist, der Reifen W zwangsläufig erneuert werden muss.

Als Alternative dazu sind aus dem Stand der Technik schon seit geraumer Zeit von Hand zu führende Schneidpistolen mit einem Messer zum manuellen Nachschneiden des Profils der Lauffläche bekannt. Hinter dieser Idee steckte der Gedanke, dass Reifen nach Erreichen dieser Minimalprofiltiefe nicht direkt entsorgt werden müssen. Solche Schneidpistolen werden von einem Nutzer per Hand unter Ausübung eines gewissen Drucks entlang einer nachzuschneidenden Rille geführt. Dies hat mehrere Nachteile: So ist diese Methodik verschleißanfällig, da das Messer relativ dünn sein muss, damit es weniger Widerstand bietet und der Nutzer nicht zu viel Kraft aufwenden muss. Bei einer unsauberen Führung kann daher das Messer schnell abbrechen. Darüber hinaus ist das Schneiden per Hand auf Dauer äußerst anstrengend, zeitaufwändig, monoton und dementsprechend ermüdend. D. h. der Nutzer braucht relativ schnell Pausen zur Erholung, da sonst die Qualität recht schnell darunter leiden kann. Somit sind von einem Nutzer z. B. an einem Arbeitstag nur geringe Stückzahlen zu erwarten. Dies wiederum macht das Nachschneiden aus wirtschaftlicher Sicht meist unrentabel, weshalb derzeit leider noch der überwiegende Teil an Reifen direkt ohne Nachschneiden entsorgt wird und stattdessen wieder neue Reifen verwendet werden. Angesichts einer zunehmend steigenden Nachfrage an Reifen und damit einhergehend zunehmender Verknappung der vorhandenen Ressourcen, sollte dieser Entwicklung entgegengesteuert werden.

Betrachtet man den jährlichen anfallenden Abfall von über 600.000 Tonnen Altreifen in Deutschland, so ist das Nachschneiden eines Profils von Nutzfahrzeugen aus ökologischer Sicht natürlich sinnvoll. Jedoch ist aufgrund der stetig steigenden Löhne, dem Fachkräftemangel und dem doch sehr zeitaufwendigen Hand-Nachschneidverfahren, das Nachschneiden wirtschaftlich betrachtet zunehmend unrentabel geworden. Grundvoraussetzung für jegliches Nachschneiden ist die Aufschrift "REGROOVABLE" auf dem Reifen, die besagt, dass das Profil des Reifens nachschneidbar ist. Alleine schon aus Konkurrenzgründen stellen heutzutage die meisten Nutzfahrzeugreifenhersteller größtenteils nur noch Reifen mit diesem Label her.

Erste Ansätze den Prozess des Nachschneidens zu erleichtern und zumindest teilweise zu automatisieren und damit effektiver zu machen, gibt es schon sehr lange. Mit diesen ersten Reifennachschneidemaschinen sollte ein Profil eines eingespannten und angetriebenen Reifens mittels eines von der Maschine geführten Schneidkopfes mit einem Messer nachgeschnitten werden.

Beispielsweise sind aus der EP 0054 389 A2, aus der EP 0022 845 B1 Verfahren und Vorrichtungen zur Profilierung von Reifen sowie aus der DE 10 2006 055 508 A1 eine automatisierte Reifenprofil-Nachschneidevorrichtung bekannt. Ein Problem ist jedoch, dass die Lauffläche eines Reifens in der Regel alles andere als gleichmäßig abgefahren ist. Mit den o. g. bisher bekannten Vorrichtungen lässt sich die Schnitttiefe bezüglich einer ungleichmäßigen Reifenwölbung (z. B. parallel zur Rotationsachse des Reifens, d. h. zwischen den beiden Schultern des Reifens) der Lauffläche abgefahrener Reifen (was in der Regel der Fall ist) - wenn überhaupt - nur sehr aufwändig, korrigieren.

Aus der DE 10 2015 002 663 B4 ist eine Vorrichtung zum Schneiden von Profilen in Fahrzeugreifen bekannt, bei der die Reifen am Fahrzeug bleiben. So müssen dort zwar die Reifen nicht erst demontiert und später wieder montiert werden. Dadurch ist allerdings nur sehr schwer eine saubere Kontrolle der Lauffläche der Reifen möglich, bei der zuverlässig sämtliche Verunreinigungen aus dem Profil entfernt werden können. Dies führt zu mehr Messerdefekten, wobei nicht klar ist, wie die Messer bei einem Defekt dann überhaupt getauscht werden sollen, während das Fahrzeug - normalerweise ein LKW - auf der Vorrichtung steht.

Aus der EP 0 190 914 A2, EP 0 324 959 A2 sowie aus der EP 0 372 090 A1 sind Vorrichtungen zum Einschneiden von Reifen bekannt, bei denen der Reifen demontiert nachgeschnitten wird. Zwar ist es hier verhältnismäßig einfach den Reifen auf Verunreinigungen im Profil zu überprüfen, jedoch muss hier das Messer, um die Schnitttiefe des Messers auch bei ungleichmäßiger Reifenwölbung konstant zu halten, kompliziert elektronisch gesteuert bzw. geregelt werden. Dies hat sich u. a. aufgrund der Ungenauigkeit der Steuerung und des Rechenaufwands als sehr praxisuntauglich herausgestellt, da die Reifenwölbung der Lauffläche von Reifen zu Reifen individuell sehr stark abweichen kann.

Es ist daher eine Aufgabe der vorliegenden Erfindung, die Nachteile des Stands der Technik zu umgehen und eine Reifennachschneidemaschine anzugeben, mit der Profile von Reifen mit weitestgehend längsverlaufenden Rillen einfacher und mit konstanter Schnitttiefe nachgeschnitten werden können.

Diese Aufgabe wird durch eine Reifennachschneidemaschine nach Patentanspruch 1 und ein Verfahren zum Nachschneiden nach Patentanspruch 14 gelöst.

Die eingangs genannte Reifennachschneidemaschine zum Nachschneiden eines Profils mit zumindest einer Rille in einer Lauffläche eines vom Fahrzeug demontierten Reifens umfasst eine Reifenaufnahme zum drehbaren Halten des Reifens auf einer Antriebsachse, welche koaxial zu einer Rotationsachse des Reifens verläuft. Mit der Rotationsachse des Reifens ist die übliche Rotationsachse im Betrieb am Fahrzeug gemeint. In der Regel kann der Reifen auf einer Antriebswelle drehbar gehalten werden. Bei dem Reifen handelt es sich üblicherweise um LKW-Reifen oder Busreifen. Aktuell ist es z. B. in Deutschland nicht erlaubt, PKW-Reifen nachzuschneiden. Sollte sich dies zukünftig (eventuell aufgrund von Ressourcenknappheit) ändern oder ist dies beispielsweise in anderen Ländern erlaubt, ist es prinzipiell vorstellbar, die erfindungsgemäße Reifennachschneidemaschine auch zum Nachschneiden von Profilen von PKW-Reifen zu nutzen.

In einer bevorzugten Ausführungsform ist die Reifennachschneidemaschine halbautomatisch ausgebildet, d. h. manche Prozesse werden durch einen Bediener gesteuert und andere Prozesse laufen automatisch ab. Zum Beispiel kann vorzugsweise die Maschine so durch einen Bediener gesteuert werden, dass die nachzuschneidende Rille angefahren und das Messer passend zum Reifen vorpositioniert wird. Der Eintauchvorgang des Messers in den Reifen sowie die Nachführung des Messers beim Schneiden erfolgt dann automatisch. Um dabei die Arbeitssicherheit zu wahren, ist die Reifennachschneidemaschine vorzugsweise so konzipiert, dass sie bei Nichtbetätigung zweier, mit jeweils einer Hand zu drückender Zustimmtaster den automatischen Betrieb stoppt.

Grundsätzlich wäre aber auch eine vollautomatische Reifennachschneidemaschine denkbar. Hierfür könnte die Reifennachschneidemaschine z. B. mit einem Roboterarm ausgestattet sein, welcher entsprechend beweglich ist und über einen Schneidkopf sowie eine Abstützvorrichtung am Ende des Roboterarms verfügt, um das Profil eines Reifens mit gleichbleibender Profiltiefe, z. B. entlang beliebig vorgebbarer weitestgehend längsverlaufender Rillen, nachzuschneiden. Für eine Spurrillenkorrektur während des Schneidens könnte zusätzlich dafür benötigte weitere Sensorik verbaut sein. Aus Sicherheitsgründen würde die Reifennachschneidemaschine dann eingezäunt bzw. eingehaust, d. h. mit einem entsprechenden Gehäuse versehen, so dass ein Arbeitsbereich des Roboterarms nicht versehentlich betreten werden kann.

Vorzugsweise kann es sich bei dem drehbaren Halten des Reifens auf der (gedachten bzw. virtuellen) Antriebsachse um ein Aufspannen oder Einspannen des Reifens an einer geeigneten Antriebswelle oder dergleichen handeln.

Weiter umfasst die Reifennachschneidemaschine Antriebsmittel, um einen von der Reifenaufnahme aufgenommenen Reifen während eines Schneidvorgangs um die Rotationsachse zu rotieren. Vorzugsweise können die Antriebsmittel dazu ausgebildet sein, den Reifen in einer gewünschten, idealen, möglicherweise je nach Art und Form der Rille abgestimmten Rotationsgeschwindigkeit um seine Rotationsachse zu rotieren bzw. zu drehen. Die Antriebsmittel können hierzu wie erwähnt in der Regel eine Antriebswelle zum Rotieren des Reifens um eine Rotationsachse des Reifens aufweisen.

Des Weiteren umfasst die Reifennachschneidemaschine eine Schneidvorrichtung, welche einen Schneidkopf mit einem Messer aufweist. Bei dem Messer kann es sich beispielsweise um eine u- oder v-förmig gebogene Messerklinge mit zwei Schenkeln handeln, welche beispielsweise in einer Messerklemme des Schneidkopfes befestigt sein kann. Als Messerklingen bieten sich besonders runde Profilschneidmesser (kurz Rundmesser) des Typs "R1", "R2", "R3", "R4", "R5" oder winklige (engl. "Curved") Profilschneidmesser (kurz Winkelmesser) des Typs "C1", "C2", "C3", "C4" oder "C5" (bzw. "W1", "W2", "W3", "W4", "W5") an oder andere Profilschneidmesser wie sie beispielsweise schon in den handbetriebenen Schneidpistolen genutzt werden können.

Ferner weist die Schneidvorrichtung erfindungsgemäß eine Abstützvorrichtung auf, um den Schneidkopf während eines Schneidvorgangs an der Lauffläche des von der Reifenaufnahme aufgenommenen Reifens abzustützen, so dass sich das Messer in der Rille der Lauffläche befindet. Abstützen meint hier, dass die Abstützvorrichtung, also z. B. in Form einer Abstützwalze oder eines Kontaktstücks, in der Regel mit (leichtem) Druck immer an der Lauffläche anliegt, so dass das Messer während eines Schneid- bzw. Nachschneidevorgangs immer in einer definierten, einstellbaren Tiefe in der Lauffläche des Reifens geführt bzw. gehalten wird.

Die Abstützvorrichtung bildet demnach eine direkte mechanische Messerführung, welche den Verlauf der Laufflächenoberfläche unmittelbar nahezu eins zu eins auf das Messer überträgt, ohne dass dazu das Messer extra gesteuert bzw. nachgeregelt werden muss, wenn z. B. der Verlauf ungleichmäßig ist etc.

Im Stand der Technik gibt es für derartige Unregelmäßigkeiten im Reifen (welche bei abgefahrenen Reifen eher die Regel als die Ausnahme sind) keine wirklich funktionierende, geschweige denn einfache Lösung. Die einzige bekannte (jedoch sehr komplexe) Möglichkeit basiert darauf, dass die Laufflächenoberfläche des Reifens vorab in einem extra Arbeitsschritt aufwändig (z. B. mittels Kamera oder Sensoren) gescannt bzw. abgetastet werden muss, so dass beim eigentlichen Nachschneidevorgang das Messer dauerhaft gemäß des gescannten Oberflächenverlaufs regelungstechnisch (z. B. mit entsprechender Steuerungssoftware) in der Schnitttiefe elektronisch geregelt bzw. gesteuert werden muss.

Bei der Abstützvorrichtung der Erfindung kann es sich demgegenüber z. B. um eine einfache Abstützwalze bzw. -rolle oder um ein gleitendes Kontakt- bzw. Gleitstück handeln. Die Abstützvorrichtung kann insbesondere so ausgebildet sein, dass sie eine ruckelfreie mechanische Führung der Schneidvorrichtung auf der Lauffläche des Reifens ermöglicht.

Schließlich umfasst die Reifennachschneidemaschine eine Steuervorrichtung, welche die Reifennachschneidemaschine in der Regel entsprechend eines vorab oder in Echtzeit getätigten Steuerbefehls eines Nutzers so steuert bzw. ansteuert, dass das Profil in der Lauffläche des Reifens entlang der gerade ausgewählten Rille nachgeschnitten wird. Dabei kann die Steuervorrichtung die Reifennachschneidemaschine so steuern, dass sie die Rille z. B. entsprechend einer zuvor ermittelten oder in einer Speichereinheit gespeicherten Profilform und Profiltiefe (passend für den betreffenden Reifen) nachschneidet. Bei einer solchen Profilform und Profiltiefe kann es sich zum Beispiel um ein beliebiges, programmierbares Rillenmuster handeln, welches vorzugsweise entlang des Reifenumfangs zumindest weitestgehend bzw. im Wesentlichen längsverlaufend ist, wie z. B. eine Wellenlinie, Zick-Zack-Linie etc.

Die erfindungsgemäße Konstruktion bringt den besonderen Vorteil mit sich, dass die Messereindringtiefe bzw. Profiltiefe des Messers in den Reifen, d. h. die Schnitttiefe in die Laufflächenoberfläche, nicht mehr aufwändig elektronisch nachgeregelt werden muss. Bei aus dem Stand der Technik bekannten Konstruktionen muss bei einer Unregelmäßigkeit (z. B. individuell gekrümmte Reifenwölbung durch lokal stärker oder schwächer abgefahrene Stellen auf dem Reifen) in der Lauffläche der Abstand des Messers zur Laufflächenoberfläche zur Korrektur dieser Unregelmäßigkeit nachgeregelt werden.

Im Allgemeinen kann ein Reifen nicht nur entlang des Umfangs unterschiedlich stark abgefahren sein, sondern auch parallel zur Rotationsachse des Reifens. Bei den Konstruktionen des Stands der Technik ist auch dann eine Korrektur nötig, wenn eine parallel zur Rotationsachse oder schräg verlaufende Rille in die Lauffläche des Reifens nachgeschnitten werden soll. Entsprechend muss dann bei einer schräg verlaufenden Rille das Messer dauerhaft nachgeregelt werden, damit die Schnitttiefe entsprechend passt.

Bei der erfindungsgemäßen Konstruktion wird hingegen nach einmaliger Einstellung zu Beginn des Schneidvorgangs für eine Rille die (z. B. durch gleichmäßige Messungen entlang des Umfangs unter Einbeziehung von Herstellerangaben ermittelte) Tiefe bzw. Schnitttiefe durch die Abstützvorrichtung automatisch gehalten. Konkret wird also auch bei einem individuellen Wölbungs- bzw. Neigungsverlauf der Laufflächenoberfläche in einer Richtung zwischen den beiden seitlichen Schultern des Reifens, also parallel zur Rotationsachse des Reifens (welcher z. B. durch ungleichmäßiges Abfahren des Reifens entstanden bzw. vorhanden sein kann) das Messer automatisch passend in der gewünschten Schnitttiefe geführt. Die Steuerung muss dann die Messerposition nur noch entsprechend der vorgegebenen Kontur des Profils, genauer gesagt der jeweiligen Rille des Profils (z. B. gemäß einer geraden Linie entlang des Umfangs des Reifens, entlang einer Wellenlinie, Zick-Zack-Linie etc. oder einer anderen beliebigen, in der Steuerung vorprogrammierbaren Rille, welche vorzugsweise entlang des Reifenumfangs zumindest im Wesentlichen bzw. weitestgehend längsverlaufend ist) steuern. In gleicher Weise kann dann für die anderen Rillen eine Profiltiefe an mehreren Stellen gemessen und die Schnitttiefe eingestellt und dort der Nachschneidevorgang gestartet werden.

Die erfindungsgemäße Reifennachschneidemaschine stellt somit eine einfachere, funktionierende Lösung dar, das Profil von nachschneidbaren Reifen schnell, in hoher Stückzahl und mit gleichbleibender Qualität nachzuschneiden. Sie eröffnet dadurch erst die Möglichkeit, zukünftig alle oder zumindest die meisten Reifen von vorneherein nachschneidbar zu fertigen.

Dementsprechend umfasst ein erfindungsgemäßes Verfahren zum Nachschneiden eines Profils mit zumindest einer Rille in einer Lauffläche eines Reifens, z. B. mittels der erfindungsgemäßen Reifennachschneidemaschine, folgende Schritte:
In einem Schritt a) wird der zu schneidende Reifen in einer Reifenaufnahme der Reifennachschneidemaschine angeordnet. Diese dient dazu, den Reifen auf einer Antriebsachse, welche koaxial zu einer Rotationsachse des Reifens verläuft, zu halten.

In einem Schritt d) - gegebenenfalls nach zumindest einem der beiden weiter unten noch erläuterten Schritte b) und c) - wird der in der Reifenaufnahme aufgenommene Reifen dann um seine Rotationsachse mithilfe von Antriebsmitteln der Reifenaufnahme angetrieben. Im Zuge des Antreibens des Reifens kann das Messer z. B. manuell in die Rille in der Lauffläche des Reifens gefahren werden, bis eine gewünschte bzw. vorgesehene Schnitttiefe erreicht ist. Hierbei taucht das Messer in die betreffende Rille des Profils in der Lauffläche des Reifens bis zu einer gewünschten Schnitttiefe ein.

Dabei steuert eine Steuervorrichtung der Reifennachschneidemaschine diese derart, dass die gerade ausgewählte Rille des Profils des Reifens, also z. B. eine beliebig zumindest weitestgehend längsverlaufende, programmierbare Rille, insbesondere eine gerade, gezackte oder gewellte Rille, mittels eines Messers einer Schneidvorrichtung der Reifennachschneidemaschine nachgeschnitten wird.

Ferner stützt sich hierfür der Schneidkopf mittels einer Abstützvorrichtung gegen den Reifen ab, so dass sich das Messer des Schneidkopfes während eines Schneidvorgangs - zumindest dann, wenn es vollständig eingetaucht ist, also üblicherweise nach ein paar Grad Drehung bzw. Rotation des Reifens - in der Rille in der Lauffläche des von der Reifenaufnahme aufgenommenen Reifens befindet.

In einem zusätzlichen optionalen Schritt b) kann der Reifen dabei an einer Antriebswelle der Reifenaufnahme mittels einer Reifenfeststellschraube, wie z. B. einer Reifenschnellspannmutter, arretiert werden.

In einem zusätzlichen optionalen Schritt c) vor Schritt d) kann die Schneidvorrichtung, insbesondere das Messer des Schneidkopfs der Schneidvorrichtung, passend zu einer ersten ausgewählten Rille des Reifens positioniert werden.

Vorzugsweise kann wie weiter unten noch genauer erläutert wird, zur Einstellung der Schnitttiefe des Messers ein Überstand der Messerfront relativ zur Abstützvorrichtung in Richtung Reifen eingestellt werden. Denn der Überstand der Messerfront gegenüber der Abstützvorrichtung entspricht der Eindringtiefe bzw. Schnitttiefe des Messers in den Reifen hinein.

Mit dem erfindungsgemäßen Verfahren wird erreicht, dass ein Verlauf der Laufflächenoberfläche ziemlich exakt auf das Messer übertragen wird, welches damit eine Rille mit gleichbleibender Schnitttiefe und (je nach Wahl des Messers) im Wesentlichen senkrecht zur Oberfläche verlaufender Nut in den Reifen nachschneidet und somit mit sehr hoher Wahrscheinlichkeit die Karkasse im Reifen nicht beschädigt. Mit einem derart nachgeschnittenen Reifen kann die Kilometerlaufleistung in der Regel auf bis zu 60.000 km erhöht werden. Zudem erhöht sich das Reibwertpotential und die Fahrsicherheit wird gesteigert, da z. B. die Gefahr von Aquaplaning reduziert wird. Des Weiteren können beim Fahren mit nachgeschnittenen Reifen in etwa 2 Liter Kraftstoff pro 100 km eingespart werden, da sich der Rollwiderstand der Reifen entsprechend verringert.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Vorzugsweise kann der Schneidkopf relativ zum Reifen in zumindest einer ersten (transversalen) Richtung parallel zur Rotationsachse bzw. quer zur Laufrichtung des Reifens sowie in zumindest einer zweiten (radialen) Richtung senkrecht dazu, vorzugsweise manuell, linear (vor-) verstellbar sein.

Die Bewegbarkeit in der ersten Richtung (parallel zur Rotationsachse des Reifens) dient zum einen dazu den Schneidkopf bzw. das Messer auf eine der - in der Regel mehreren - Rillen des Reifens einzustellen, d. h. in eine Position zum Nachschneiden einer der in Reifen meist nebeneinander ausgebildeten, z. B. geradlinigen, gewellten oder gezackten, oder sonst beliebig programmierbaren Längsrillen zu bringen, und zum anderen dazu, z. B. bei eben solchen gewellten oder gezackten oder beliebig programmierbaren Längsrillen, also Rillen, welche nicht ausschließlich in Azimutalrichtung bzw. Umlaufrichtung des Reifens verlaufen, die Quer- bzw. Transversalkomponente zu bedienen.

Vorzugsweise ist das Messer auch um eine Schneidkopfachse im Schneidkopf schwenkbar gelagert. Durch eine, z. B. periodische, Verschwenkung des Messers hin und her um diese Schneidkopfachse während einer Rotation des Reifens (im bestimmungsgemäßen Betrieb zum Nachschneiden eines Profils), können z. B. die Konturen von gewellten oder gezackten Längsrillen gut nachgeschnitten werden. Allerdings ist die Erfindung nicht auf eine solche periodische Verschwenkung beschränkt. So können beispielsweise durch eine nicht-periodische oder eine andere periodische Verschwenkung des Messers auch andere beliebig, vorzugsweise weitestgehend längsverlaufende, programmierbare Rillenmuster nachgeschnitten werden.

Die Bewegbarkeit in der zweiten Richtung (senkrecht zur Rotationsachse des Reifens) dient dazu, die gewünschte Schnitttiefe des Messers bzw. der Rille einzustellen, d. h. wie weit das Messer, genauer gesagt die Messerfront bzw. der vorderste Teil des Messers relativ zur Front der Abstützvorrichtung hervorsteht.

Der Schneidkopf ist wiederum bevorzugt um eine Schwenkachse in der Schneidvorrichtung schwenkbar gelagert. Besonders bevorzugt kann auch die Abstützvorrichtung entsprechend mit um die Schwenkachse schwenkbar gelagert sein.

Dabei ist die Schneidvorrichtung vorzugsweise derart aufgebaut und angeordnet, dass die Schwenkachse des Schneidkopfes, während eines Nachschneidevorgangs eines Profils eines Reifens, im bestimmungsgemäßen Betrieb in einer Tangentialebene verläuft, die tangential an (einer "Einhüllenden") einer Laufflächenoberfläche des Reifens anliegt.

Besonders bevorzugt kann dabei die Schneidvorrichtung aus einer horizontalen, im Wesentlichen radialen Richtung seitlich gegen den Reifen gedrückt oder gezogen werden. Dies kann beispielsweise durch eine geeignete gefederte Lagerung des Schneidkopfs (mittels einer Federanordnung, wie dies später noch beschrieben wird) oder dergleichen realisiert werden.

Dies unterstützt eine freie, kontinuierliche Neigungsanpassung des Messers an die Reifenwölbung bzw. Laufflächenoberfläche des Reifens, insbesondere bei einer vektoriellen Bewegung des Messers mit einer Komponente parallel zur Rotationsachse des Reifens.

Damit kann einfach sichergestellt werden, dass sich das Messer wie gewünscht in einer definierten, einstellbaren Tiefe in der Rille der Lauffläche befindet.

Für die Ausgestaltung der Abstützvorrichtung gibt es verschiedene Möglichkeiten:
Grundsätzlich könnte die Abstützvorrichtung der Schneidvorrichtung eine Walze mit Kugellager umfassen, welche direkt neben dem Messer des Schneidkopfes angebracht bzw. angeordnet ist.

Vorzugsweise kann die Abstützvorrichtung, bevorzugt seitlich neben dem Messer, zumindest eine Abstützwalze umfassen. Eine solche Abstützwalze, im Folgenden auch kurz Walze genannt, umfasst vorteilhafterweise ein Kugellager, wie z. B. ein Rillenkugellager, in welchem sie um eine Walzenrotationsachse drehbar zur Schneidvorrichtung gelagert ist. Im Schneidbetrieb, d. h., wenn der Reifen angetrieben wird, fährt die Abstützwalze die Laufflächenoberfläche des Reifens ab und "stützt" dabei das Messer ab.

Bei einer einfacheren Version der Reifennachschneidemaschine kann diese z. B. nur eine Abstützwalze umfassen. Diese kann z. B. in Rotationsrichtung bzw. Umlaufrichtung des Reifens (dessen Profil gerade nachgeschnitten werden soll) vor oder hinter dem Messer am Reifen anliegen. Sie kann sich zum Beispiel auch über einen Großteil der Breite des Reifens erstrecken.

Besonders bevorzugt weist aber die Abstützvorrichtung seitlich neben dem Messer eine Abstützwalze auf, vorzugsweise jeweils beidseitig neben dem Messer angeordnete Abstützwalzen.

Wenn im Schneidbetrieb die Abstützwalze die Laufflächenoberfläche des Reifens jeweils direkt neben der nachzuschneidenden Rille das Messer "stützend" abfährt (also abfährt und dabei "stützt"), kann sich die jeweilige Abstützwalze, welche mit ihrer Mantelfläche flach auf der Laufflächenoberfläche läuft, stets entsprechend radial zur Laufflächenoberfläche ausrichten, so dass sich auch das mitgeführte bzw. indirekt daran gekoppelte Messer des Schneidkopfes gleichermaßen mitneigt bzw. ausrichtet.

Insbesondere bei einer solchen bevorzugten Konstruktion kann bzw. können die Abstützwalze(n) vorzugsweise jeweils schmaler (bzw. in Richtung der Walzenrotationsachse kürzer) sein als ein Abstand zwischen zwei benachbarten, nachzuschneidenden Rillen der Lauffläche des Reifens, aber z. B. breiter als ein gängiges Längsrillenmuster und/oder eine Rillenbreite (quer zur Laufrichtung) der betreffenden Rille des Profils. Als gängige Längsrillenmuster gelten im Rahmen der Erfindung diejenigen Rillenmuster, welcher typischerweise in Reifen, insbesondere LKW-Reifen, zu finden sind und welche sich über weniger als ein Viertel der Reifenbreite des Reifens erstrecken. Breitere Rillenmuster gelten nicht mehr als Längsrillenmuster, sondern als Querrillenmuster. Damit wird erreicht, dass der Wölbungsverlauf des Reifens in unmittelbarer Nähe der betreffenden Rille als Abstützoberfläche genutzt wird, und damit möglichst exakt der tatsächliche Wölbungsverlauf der Lauffläche im Bereich der Rille abgebildet wird, so dass die Schnitttiefe nur so tief reicht, dass die Karkasse - wenn überhaupt - eigentlich nur bei einem Betriebsfehler bzw. Defekt der Reifennachschneidemaschine gegebenenfalls beschädigt wird.

Vorzugsweise beträgt die Breite der Abstützwalze(n) in Richtung der Walzenrotationsachse höchstens 50 mm und besonders bevorzugt höchstens 40 mm. Vorzugsweise beträgt der Durchmesser der Abstützwalze(n) 110 mm.

Wie bereits erwähnt kann die Schneidvorrichtung zumindest eine Federanordnung mit zumindest einem Federelement aufweisen, um zumindest einen Teil des Schneidkopfs und/oder der Abstützvorrichtung um die Schwenkachse federnd in eine Neutralstellung zurückstellen, wenn keine externe Kraft auf die Abstützvorrichtung wirkt, also z. B., wenn die Mantelfläche der Abstützwalze der Abstützvorrichtung nicht gegen die Laufflächenoberfläche des Reifen drückt.

Die Schneidvorrichtung kann somit vorzugsweise derart federnd gelagert sein, dass sie nach einer Schwenkauslenkung um die Schwenkachse aufgrund eines entsprechenden Verlaufs der Laufflächenoberfläche aus einer (mittleren) Neutralstellung, in der das Messer des Schneidkopfs radial zur Rotationsachse des Reifens ausgerichtet ist, mittels einer definierten Federkraft wieder in die Neutralstellung geschwenkt wird, sofern die Laufflächenoberfläche ebenfalls wieder parallel zur Rotationsachse verläuft.

Die Federanordnung kann dabei bevorzugt auf einer reifenabgewandten Seite der Schwenkachse angeordnet sein.

Besonders bevorzugt kann die Schneidvorrichtung zwei Federelemente umfassen, welche auf einer reifenabgewandten Seite der Schwenkachse in einer Richtung im Wesentlichen parallel zur Rotationsachse des Reifens (zwischen einem oberen und einem dazu drehbaren unteren Teil der Schneidvorrichtung) angeordnet sind und dabei zwischen sich jeweils einen Teil des Schneidkopfs und/oder der Abstützvorrichtung federnd in eine Neutralstellung zurückstellen, wenn die Laufflächenoberfläche der Abstützvorrichtung die Neutralstellung entsprechend freigibt, d. h. wenn sich das Messer z. B. an einer Position befindet, an der die horizontale Tangente an die Laufflächenoberfläche des Reifens gerade wieder parallel zur Rotationsachse des Reifens verläuft.

Mit der federnd gelagerten, mechanischen Messerführung der Schneidvorrichtung mithilfe von federnd gelagerten Abstütz- bzw. Andruckwalzen, welche beim Schneiden in Drucckontakt mit der Lauffläche des Reifens stehen und sich mit der Lauffläche bzw. mit dem Reifen, hier z. B. dem LKW-Reifen mitdrehen, wird dafür gesorgt, dass das Messer der Laufflächenoberfläche der Lauffläche des Reifens folgend passend radial bzw. normal/senkrecht geneigt ausgerichtet wird, also eine automatische, kontinuierliche Neigungsanpassung des Messers passend zur Laufflächenoberfläche des Reifens erfolgt. Das Messer steht somit beim Nachschneiden einer Rille des Profils des Reifens stets radial bzw. senkrecht/lotrecht (mit seiner "Schneidkopfachse") zur Laufflächenoberfläche.

Vorzugsweise kann der Schneidkopf, insbesondere das Messer innerhalb des Schneidkopfs, z. B. zusätzlich zur oben beschriebenen federnden Lagerung um die Schwenkachse, axial in einer Schnitttiefenrichtung (d. h. in einer Richtung, in die das Messer in eine Rille eines nachzuschneidenden Reifenprofils hineingedrückt wird) federnd gelagert sein. Somit kann das Messer bei zu hohen Andruckkräften bzw. Kräften, welche ungewollte Verformungen hervorrufen könnten, vorzugsweise ab einer Kraft von mehr als 70N, ein wenig eingefedert werden und damit entsprechend federnd nachgeben. Damit wird verhindert, dass das Messer zu viel Druck ausgesetzt wird, z. B. wenn der Bediener das Messer zu stark gegen den Reifen drückt, wie weiter unten noch bei einer Beschreibung eines möglichen Ablaufs erläutert.

Für die genauere Ausgestaltung des Schneidkopfes gibt es verschiedene Möglichkeiten:
Vorzugsweise kann der Schneidkopf einen axial verstellbaren Schnitttiefeneinsteller sowie einen Schnittrichtungseinsteller bzw. Schnittwinkeleinsteller für das Messer umfassen, welche vorzugsweise auch kombiniert in einer Schneidkopfachse, hier einer Längsachse des Schneidkopfes einstellbar sind. Ein Beispiel für eine solche kombinierte Einstellung findet sich in einem später noch beschriebenen Ausführungsbeispiel in Form einer mehrteiligen Wellen-Konstruktion. Zum Schnittwinkeleinsteller kann dabei ein Motor (z. B. ein Schrittmotor samt Keilriemen) gehören, welcher den Schneidkopf mit dem Messer - z. B. bei einer Zick-Zack-Rille am Ende einer "Zacke" aus einer Erstreckungsrichtung dieser Zacke in eine Erstreckungsrichtung der nächsten, schräg dazu verlaufenden "Zacke" - um die Schneidkopfachse umschwenkt. D. h. der Schnittwinkeleinsteller stellt den "Gierwinkel" des Messer in die gerade vorliegende Verlaufsrichtung der Rille ein, also in welche Richtung das Messer in die Lauffläche schneidet. Bei einer solchen Zick-Zack-Rille wird das Messer also immer nach einem kurzen Abschnitt zum jeweils anderen Gierwinkel geschwenkt. Bei einer wellenförmigen Rille kann z. B. während der Rotation des Reifens das Schwenken des Messers um die Schneidkopfachse gemäß einer Sinusfunktion oder dergleichen erfolgen. Indem der Schnittrichtungseinsteller bzw. Schnittwinkeleinsteller mit einem entsprechenden zeitlich beliebigen Schwenkablauf programmiert wird bzw. aus dem Speicher ein entsprechendes Schnittrillenmuster gewählt wird, kann ein beliebiges, insbesondere weitestgehend längsverlaufendes, Schnittrillenmuster in die Lauffläche nachgeschnitten werden.

Vorzugsweise kann die Schneidvorrichtung über Andruckmittel und/oder Zugmittel verfügen, die den Schneidkopf, vorzugsweise in einer im Wesentlichen horizontalen Richtung, d. h. in einer Axialrichtung bzw. Schnitttiefenrichtung des Schneidkopfes der Schneidvorrichtung, gegen den Reifen drücken bzw. ziehen.

Die Andruckmittel können beispielsweise einen pneumatisch, hydraulisch oder motorisch betriebenen Zylinder, Federsysteme oder dergleichen umfassen. Die Zugmittel können beispielsweise einen Schrittmotor, einen Motor mit Riementrieb, eine Spindelachse mit Antrieb (bzw. Kugelrollspindel), einen Kettenantrieb, eine Zahnstange mit Zahnrad oder dergleichen umfassen.

Bevorzugt kann der Schneidkopf der Schneidvorrichtung auf einem Schlitten entlang einer Traversenschiene in einer Richtung parallel zur Rotationsachse des Reifens innerhalb der Schneidvorrichtung beweglich gelagert sein. Der Schlitten kann beispielsweise Gleitstangen umfassen, welche in Gleitführungen gleitend gelagert sind.

Besonders bevorzugt kann der Schneidkopf dabei um eine Schwenkachse relativ zum Schlitten bzw. relativ zum Reifen schwenkbar im Schlitten aufgenommen sein.

Somit lässt sich das Messer in eine Position zum Nachschneiden einer der mehreren typischerweise in Reifen nebeneinander ausgebildeten, z. B. geradlinigen oder gezackten Längsrillen bringen. Mit der Erfindung lassen sich allerdings auch andere beliebige, insbesondere weitestgehend längsverlaufende, Rillenmuster in eine Lauffläche eines Reifens schneiden.

Für die Realisierung einer einfachen Halterung eines nachzuschneidenden Reifens auf der Antriebsachse der Reifennachschneidemaschine gibt es verschiedene Möglichkeiten:
Vorzugsweise kann die Reifenaufnahme einen Zuführschlitten zum Einfädeln des Reifens auf die Antriebswelle umfassen.

Alternativ oder zusätzlich kann die Reifenaufnahme Hubmittel umfassen, vorzugsweise in Form eines Scherenhubtisches, z. B. mit einem hydraulischen oder pneumatischen Zylinder, um einen Reifen auf die Höhe der Antriebswelle der Reifenaufnahme anzuheben.

Theoretisch könnte die Reifenaufnahme aber gegebenenfalls auch selbst über zusätzliche Positionierungsmittel verfügen, um den Reifen geeignet für den Nachschneidvorgang des Profils des Reifens zu positionieren, z. B. also in eine jeweilige gewünschte Startposition zu bringen, in der dann direkt oder zumindest nahezu direkt mit dem Nachschneiden einer Rille begonnen werden kann.

Ganz besonders bevorzugt kann die Reifennachschneidemaschine zusätzlich eine Kühlvorrichtung mit zumindest einem Kühlkanal und zumindest einem Luftauslass umfassen, um das Messer der Schneidvorrichtung im Schneidbetrieb mittels eines Gasstroms, insbesondere eines Luftstroms zu kühlen.

Besonders bevorzugt kann die Reifennachschneidemaschine zwei Luftauslässe aufweisen, um das Messer jeweils zielgerichtet bzw. fokussiert an einer Eintauchstelle eines jeden Schenkels des Messers möglichst dicht an der Eintauchstelle an einem aus dem Reifen herausstehenden Messerteil mit einem jeweiligen Gasstrom, insbesondere Luftstrom, zu kühlen. Gegenüber Konstruktionen aus dem Stand der Technik hat dies den Vorteil, dass damit keine Kühlflüssigkeit benötigt wird (welche sonst in der Mitte zwischen die beiden Schenkel des Messers eingebracht wird), und dass je nach Kühlflüssigkeit in der Regel keine Reinigung des Reifens im Nachgang erforderlich ist.

Damit lässt sich zudem der nicht im Gummi des Reifens befindliche Teil des Messers bzw. herausstehende Messerteil (oberhalb bzw. außerhalb der Laufflächenoberfläche) möglichst effektiv kühlen. Mit dem herausstehenden Messerteil ist der Teil des Messers gemeint, der während des Schneidens aus dem Reifen herausragt, also nicht eintaucht. Dies sorgt dafür, dass die eingesetzten Messer deutlich länger intakt bleiben und nicht so oft gewechselt werden müssen, wie dies ohne gezielte Luftkühlung der Fall wäre.

Eine solche Konstruktion einer Kühlvorrichtung mit zumindest einem Kühlkanal und zumindest einem Luftauslass, vorzugsweise zwei Luftauslässen, kann prinzipiell an jeder Reifennachschneidemaschine von Vorteil sein, die wie eingangs erwähnt eine Reifenaufnahme zum Halten des Reifens an einer Antriebsachse, welche koaxial zu einer Rotationsachse des Reifens verläuft, Antriebsmittel, um einen von der Reifenaufnahme aufgenommenen Reifen während eines Schneidvorgangs um die Rotationsachse zu rotieren, eine Steuervorrichtung, welche die Reifennachschneidemaschine so steuert, dass das Profil des Reifens entlang der Rille nachgeschnitten wird sowie eine Schneidvorrichtung umfasst, welche einen Schneidkopf mit einem Messer aufweist, unabhängig davon, wie genau die Schneidvorrichtung aufgebaut ist, insbesondere, ob diese eine erfindungsgemäße Abstützvorrichtung aufweist. Sie kann also als eigenständige Idee gesehen werden, auch wenn eine Kombination dieser Kühlvorrichtung mit der erfindungsgemäßen Abstützvorrichtung synergistisch zu besonders langen Standzeiten des Messers führen kann und daher bevorzugt ist.

Eine solche Luftkühlung ist insbesondere dann von Vorteil, wenn das Messer wie bevorzugt beim Schneiden nicht vollständig, also nur teilweise in den Reifen bzw. in die Lauffläche des Reifens eintaucht. Besonders dann unterstützt die zusätzliche Luftkühlung nämlich die Haltbarkeit des Messers, da dieses nicht nur im Reifen durch das Gummi, sondern auch außerhalb zusätzlich gekühlt wird. Ein derart gekühltes Messer kann demnach länger durchhalten, d. h. intakt bleiben, als ein ungekühltes Messer.

Bevorzugt kann die Reifennachschneidemaschine für einen Betrieb mit 230V ausgebildet sein. Dadurch wird kein Starkstromanschluss benötigt, was speziell für kleinere Betriebe, wie z. B. Einzelunternehmer bzw. Selbständige, oder beispielsweise bei einem mobilen Einsatz von Vorteil ist.

Vorzugsweise können die maximalen räumlichen Abmessungen bzw. Außenabmessungen der Reifennachschneidemaschine derart gewählt sein, dass sie sich in einem bzw. im Inneren eines herkömmlichen Transporters, d. h. eines Transporter-Laderaums mit folgenden Mindestladeraummaßen, verstauen und transportieren lässt:
Länge ca. 200 cm
Breite ca. 134 cm
Höhe ca. 170 cm

Darüber hinaus kann sie zur leichteren Verladung zum Beispiel Staplerschuhe für die Gabelzinken eines Gabelstaplers bzw. eines Hubwagens aufweisen, so dass sie sehr einfach von einem Gabelstapler in einen gängigen Transporter verladen und am Ziel auch wieder entladen werden kann.

Vorzugsweise kann die Reifennachschneidemaschine Bedienungselemente umfassen, wie z. B. ein Bedienpult mit Tasten und Hebeln und/oder ein Bedienfeld bzw. einen Touch-Display, Hebel und/oder Pedale. Das Bedienfeld könnte z. B. über ein Eingabefeld mit Tasten oder einen Touch-Display verfügen, in welchem Steuerbefehle für die Steuervorrichtung eingegeben bzw. der Steuervorrichtung, z. B. als Bedienbefehle per Hand übergeben werden können. Zusätzlich kann die Steuervorrichtung aber vorzugsweise auch mittels zumindest eines Pedals für eine Bedienung per Fuß ausgebildet sein, um die Reifennachschneidemaschine über die zugrundliegende Steuervorrichtung beispielsweise so anzusteuern, dass ein ausgewähltes Profil mit einer gewünschten Profilform und Profiltiefe in eine Lauffläche des Reifens nachgeschnitten wird. Besonders bevorzugt können die Bedienelemente und die Steuervorrichtung derart ausgebildet sein, dass aus Sicherheitsgründen zur Aufrechterhaltung eines Schneidbetriebs stets beide Hände entsprechende Bedienelemente, wie z. B. Tasten oder Hebel, insbesondere Zustimmtaster sowie ein Joystick, betätigen bzw. gedrückt halten müssen. D. h. die Reifennachschneidemaschine kann bevorzugt mit einer sogenannten Zweihandschaltung ausgestattet sein.

Die Erfindung betrifft insbesondere die folgenden Merkmalskombinationen:
1. Reifennachschneidemaschine zum Nachschneiden eines Profils mit zumindest einer Rille in einer Lauffläche eines Reifens, mit
   - einer Reifenaufnahme zum Halten eines Reifens auf einer Antriebsachse, welche koaxial zu einer Rotationsachse des Reifens verläuft,
   - Antriebsmitteln, um einen von der Reifenaufnahme aufgenommenen Reifen während eines Schneidvorgangs um die Rotationsachse zu rotieren,
   - einer Schneidvorrichtung, welche
      - einen Schneidkopf mit einem Messer und
      - eine Abstützvorrichtung, um den Schneidkopf während eines Schneidvorgangs an der Lauffläche des von der Reifenaufnahme aufgenommenen Reifens abzustützen, so dass sich das Messer in der Rille der Lauffläche befindet,
      aufweist,

   - einer Steuervorrichtung, welche die Reifennachschneidemaschine so steuert, dass das Profil des Reifens entlang der Rille nachgeschnitten wird.
2. Reifennachschneidemaschine nach Merkmalskombination 1, wobei der Schneidkopf um eine Schwenkachse in der Schneidvorrichtung schwenkbar gelagert ist und wobei vorzugsweise das Messer um eine Schneidkopfachse im Schneidkopf schwenkbar gelagert ist.
3. Reifennachschneidemaschine nach Merkmalskombination 2, wobei die Schneidvorrichtung derart aufgebaut und angeordnet ist, dass die Schwenkachse des Schneidkopfes im bestimmungsgemäßen Betrieb während eines Nachschneidevorgangs eines Profils eines Reifens tangential, vertikal in der Tangentialebene an der Laufflächenoberfläche am Reifen anliegt und dabei vorzugsweise die Schneidvorrichtung aus einer horizontalen, im Wesentlichen radialen Richtung seitlich gegen den Reifen gedrückt oder gezogen wird.
4. Reifennachschneidemaschine nach einer der vorstehenden Merkmalskombinationen, wobei die Abstützvorrichtung, bevorzugt jeweils seitlich neben dem Messer, zumindest eine Abstützwalze umfasst, welche vorzugsweise jeweils schmaler ist als ein Abstand zwischen zwei nachzuschneidenden Rillen der Lauffläche des Reifens aber breiter als ein Längsrillenmuster und/oder eine Rillenbreite der betreffenden Rille des Profils.
5. Reifennachschneidemaschine nach einer der vorstehenden Merkmalskombinationen, wobei die Schneidvorrichtung eine Federanordnung mit zumindest einem Federelement umfasst, um zumindest einen Teil des Schneidkopfs und/oder der Abstützvorrichtung federnd in eine Neutralstellung zurückstellen, wenn keine externe Kraft auf die die Abstützvorrichtung wirkt.
6. Reifennachschneidemaschine nach einer der vorstehenden Merkmalskombinationen, wobei der Schneidkopf und/oder das Messer innerhalb des Schneidkopfs, in einer Schnitttiefenrichtung axial federnd gelagert ist.
7. Reifennachschneidemaschine nach einer der vorstehenden Merkmalskombinationen, wobei der Schneidkopf einen axial verstellbaren Schnitttiefeneinsteller und/oder einen Schnittwinkeleinsteller für das Messer umfasst.
8. Reifennachschneidemaschine nach einer der vorstehenden Merkmalskombinationen, wobei die Schneidvorrichtung über Andruckmittel und/oder Zugmittel verfügt, die den Schneidkopf, vorzugsweise in einer im Wesentlichen horizontalen Richtung, gegen den Reifen drücken bzw. ziehen.
9. Reifennachschneidemaschine nach einer der vorstehenden Merkmalskombinationen, wobei der Schneidkopf der Schneidvorrichtung auf einem Schlitten entlang einer Traversenschiene in einer Richtung parallel zur Rotationsachse des Reifens innerhalb der Schneidvorrichtung beweglich gelagert ist und wobei vorzugsweise der Schneidkopf dabei um die Schwenkachse relativ zum Schlitten schwenkbar im Schlitten aufgenommen ist.
10. Reifennachschneidemaschine nach einer der vorstehenden Merkmalskombinationen, wobei die Reifenaufnahme einen Zuführschlitten zum Einfädeln des Reifens auf eine Antriebswelle umfasst, und/oder
   wobei die Reifenaufnahme Hubmittel umfasst, vorzugsweise in Form eines Scherenhubtisches, um einen Reifen auf eine Höhe einer Antriebswelle der Reifenaufnahme anzuheben.
11. Reifennachschneidemaschine, insbesondere nach einer der vorstehenden Merkmalskombinationen, zum Nachschneiden eines Profils mit zumindest einer Rille in einer Lauffläche eines Reifens, vorzugsweise mit
   - einer Reifenaufnahme zum Halten des Reifens auf einer Antriebsachse, welche koaxial zu einer Rotationsachse des Reifens verläuft,
   - Antriebsmitteln, um einen von der Reifenaufnahme aufgenommenen Reifen während eines Schneidvorgangs um die Rotationsachse zu rotieren,
   - einer Steuervorrichtung, welche die Reifennachschneidemaschine so steuert, dass das Profil des Reifens entlang der Rille nachgeschnitten wird,
   - einer Schneidvorrichtung, welche einen Schneidkopf mit einem Messer aufweist, und einer Kühlvorrichtung mit zumindest einem Luftauslass, um das Messer der Schneidvorrichtung im Schneidbetrieb mittels eines Gasstroms, insbesondere eines Luftstroms zu kühlen,
   vorzugsweise zumindest zwei Luftauslässen, um das Messer jeweils zielgerichtet an einer Eintauchstelle eines jeden Schenkels des Messers möglichst dicht an der Eintauchstelle an einem herausstehenden Messerteil mit einem jeweiligen Gasstrom, insbesondere Luftstrom, zu kühlen.
12. Reifennachschneidemaschine nach einer der vorstehenden Merkmalskombinationen, wobei die Reifennachschneidemaschine für einen Betrieb mit 230V ausgebildet ist.
13. Reifennachschneidemaschine nach einer der vorstehenden Merkmalskombinationen, wobei die maximalen räumlichen Abmessungen der Reifennachschneidemaschine derart gewählt sind, dass sie sich, vorzugsweise in einem einsatzbereiten Zustand, in einem Transporter-Laderaum mit folgenden Mindestladeraummaßen verstauen und transportieren lässt:
   Länge ca. 200 cm
   Breite ca. 134 cm
   Höhe ca. 170 cm
14. Verfahren zum Nachschneiden eines Profils mit zumindest einer Rille in einer Lauffläche eines Reifens mittels einer Reifennachschneidemaschine, insbesondere nach einer der vorstehenden Merkmalskombinationen, umfassend folgende Schritte:
   a) Anordnen des Reifens in einer Reifenaufnahme der Reifennachschneidemaschine zum Halten des Reifens auf einer Antriebsachse, welche koaxial zu einer Rotationsachse des Reifens verläuft,
   b) optional Arretieren des Reifens an einer Antriebswelle der Reifenaufnahme mittels einer Reifenfeststellschraube,
   c) optional Positionieren einer Schneidvorrichtung der Reifennachschneidemaschine, insbesondere eines Messers eines Schneidkopfs der Schneidvorrichtung, passend zu einer ersten ausgewählten Rille des Reifens,
   d) Antreiben des in der Reifenaufnahme aufgenommenen Reifens um seine Rotationsachse mithilfe von Antriebsmitteln der Reifenaufnahme,
   wobei eine Steuervorrichtung der Reifennachschneidemaschine diese derart steuert, dass die gerade ausgewählte Rille des Profils des Reifens mittels eines Messers einer Schneidvorrichtung der Reifennachschneidemaschine nachgeschnitten wird, dadurch gekennzeichnet, dass der Schneidkopf mittels einer Abstützvorrichtung gegen den Reifen abgestützt wird, so dass sich das Messer des Schneidkopfes während eines Schneidvorgangs in der Rille in der Lauffläche des von der Reifenaufnahme aufgenommenen Reifens befindet.
15. Verfahren nach Merkmalskombination 14, wobei das Messer beim Schneiden nur zum Teil in die Lauffläche eintaucht und vorzugsweise ein aus dem Reifen herausstehender Messerteil mittels einer Luftkühlung beaufschlagt wird.

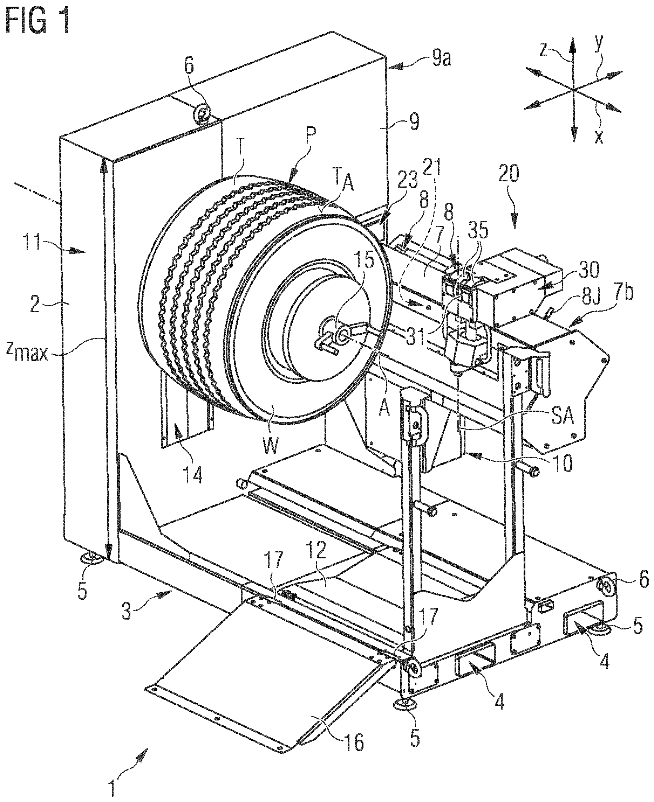

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: eine perspektivische Übersichtsdarstellung eines Ausführungsbeispiels einer erfindungsgemäßen Reifennachschneidemaschine mit eingespanntem Reifen,
- Figur 2: eine Ansicht von oben auf das Ausführungsbeispiel aus Figur 1, in einer geraden Position des Schneidkopfs zum Nachschneiden der mittleren Rille des Reifens,
- Figur 3: eine Ansicht von oben auf das Ausführungsbeispiel aus Figur 1, in zwei weiteren geneigten Positionen des Schneidkopfs zum Nachschneiden der jeweiligen äußersten Rillen des Reifens,
- Figur 4: eine vergrößerte Ansicht der Schneidvorrichtung des Ausführungsbeispiels aus Figur 1 im Teilschnitt, mit Blick auf eine Schnittfläche entlang einer Schnittlinie durch den Schneidkopf der Schneidvorrichtung nach den Figuren 1 bis 3,
- Figur 5: eine weiter vergrößerte Ansicht des Schneidkopfes der Schneidvorrichtung nach Figur 4, jedoch in einem anderen Teilschnitt,
- Figur 6: eine perspektivische, isolierte Ansicht der Schneidvorrichtung aus Figur 1 (ohne Traversenschiene),
- Figur 7: eine perspektivische Ansicht eines weiteren vereinfachten Ausführungsbeispiels einer erfindungsgemäßen Reifennachschneidemaschine.
Anhand der Figuren 1 bis 6 wird nun zunächst ein erstes Ausführungsbeispiel einer erfindungsgemäßen Reifennachschneidemaschine 1 beschrieben, im Folgenden der Einfachheit halber nur noch mit "Maschine 1" bezeichnet. Diese dient zum Nachschneiden von Rillen R₁, R₂, R₃, R₄, R₅ eines abgefahrenen Profils P in einer Lauffläche T eines nachschneidbaren Reifens W, hier z. B. eines LKW-Reifens W. Dabei wird eine Profiltiefe der Rillen R₁, R₂, R₃, R₄, R₅ in der Lauffläche T bzw. Laufflächenoberfläche T_{A} des Reifens W entsprechend einem gesetzlich vorgegebenen Wert nachgeschnitten, so dass der Reifen W nach dem Nachschneiden noch einige Zeit weiter verwendet bzw. gefahren werden kann, bevor er entsorgt werden muss oder bestenfalls recycelt wird. Damit kann die Laufzeit sowie Laufleistung des Reifens W beträchtlich verlängert werden, was sowohl Kosten als auch Ressourcen einspart und damit wesentlich nachhaltiger ist, als den Reifen W direkt, nachdem er bis zu einem gewissen Grad abgefahren worden ist, ersetzen zu müssen. An dieser Stelle sei noch einmal betont, dass das Nachschneiden nicht nur die gesetzlich vorgegebene Profiltiefe wiederherstellt, sondern darüber hinaus auch die Laufleistung des Reifens W wieder verbessert, so dass der Reifen W runder bzw. reibungsärmer läuft und somit beim Fahren mit einem Fahrzeug mit solchen Reifen W insbesondere erheblich Kraftstoff- bzw. Spritmengen eingespart werden können. Dieser Faktor kann aufgrund der stetig steigenden Kraftstoffpreise überhaupt nicht gering genug eingeschätzt werden. Davon abgesehen trägt die Profiltiefe bekanntermaßen wesentlich zur Fahrsicherheit, also zum Handling sowie den Bremseigenschaften des betreffenden Fahrzeugs bei.

Um das Profil P abgefahrener Reifen W also wie gewünscht optimal sowie in möglichst kurzer Zeit weitestgehend automatisch und für einen Bediener der Maschine 1 mühelos nachschneiden zu können, ist die Maschine 1 wie folgt aufgebaut und umfasst folgende Komponenten:
Grundsätzlich ist die in den Figuren gezeigte Maschine 1 mit einer im Grundriss in einer Breitenrichtung x (Richtung parallel zur Rotationsachse des Reifens bzw. x-Richtung) sowie in einer Tiefenrichtung y (Axialrichtung eines Schneidkopfs bzw. y-Richtung) rechteckigen Bodenplatte 3 versehen.

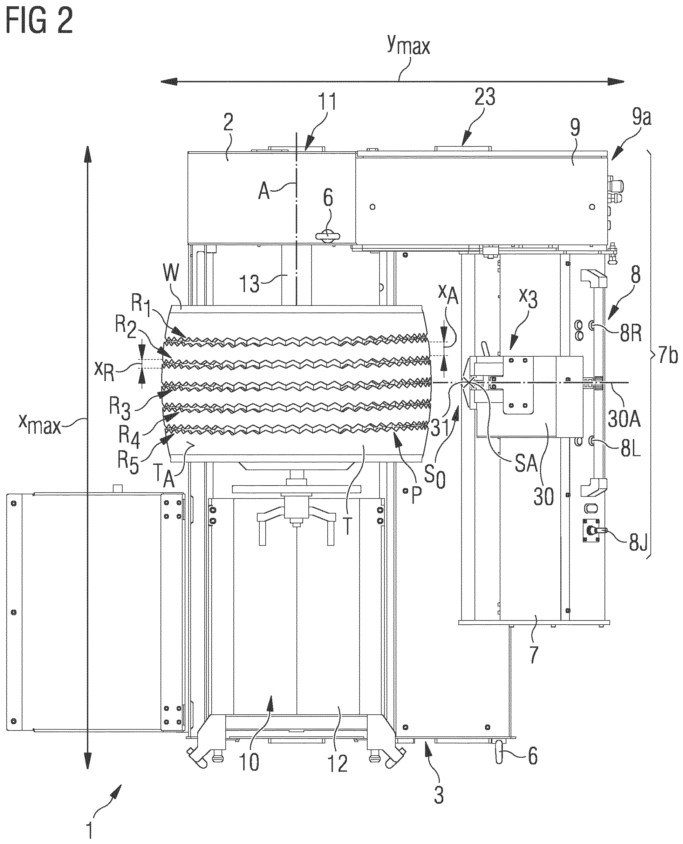

An die Bodenplatte 3 schließt sich seitlich auf einer in Figur 1 in Breitenrichtung x hinteren Seite ein quaderförmiger Aufbau 2 in Form eines weitestgehend geschlossenen Gehäuses 2 an, welches sich schrankförmig nach oben in einer Höhenrichtung z bzw. z-Richtung sowie über die gesamte Tiefe der Bodenplatte 3 erstreckt. Der Aufbau 2 verbreitert die Bodenplatte 3 damit ein wenig (hier in Figur 1 nach hinten), so dass der Grundriss der Maschine 1 die räumlichen Abmessungen xₘₐₓ, yₘₐₓ bzw. Außenabmessungen xₘₐₓ, yₘₐₓ (siehe Figur 2) aufweist.

Nach oben hin ist der Aufbau 2 hier höchstens in etwa mannshoch mit einer maximalen räumlichen Abmessung zₘₐₓ (siehe Figur 1) von ca. 170 cm und nimmt im Inneren zumindest jeweils ein maschinenseitiges Ende der wesentlichen mechanischen und elektronischen Komponenten der Maschine 1 auf. Damit ist gemeint, dass sich zwar ein statischer Teil der Komponenten zumindest teilweise innerhalb des Aufbaus 2 befindet, jedoch ein dynamischer Teil, wie z. B. eine Antriebswelle 13 der Reifenaufnahme 10, mit welcher der nachzuschneidende Reifen W gehalten und gedreht wird, aus dem Aufbau 2 über die Bodenplatte 3 hinausragt.

Ferner ragt aus dem Aufbau auch eine Traverse bzw. ein Ausleger mit einer Traversenschiene 21, in bzw. relativ zu welcher unter anderem eine später noch beschriebene Schneidvorrichtung 20 verfahrbar ist. Die Traversenschiene 21 umfasst dazu zwei Gleitstangen 21g, an welchen jeweils Gleitführungen 20g der Schneidvorrichtung 20 gleitend gelagert sind sowie zwischen den Gleitstangen 21g eine Zahnstange 21z mit Zähnen, in welche ein motorisch ansteuerbares Zahnrad 20z der Schneidvorrichtung 20 zur Relativbewegung der Schneidvorrichtung 20 relativ zur Traversenschiene 21 eingreift.

Ebenfalls am Aufbau 2 an einem Ende befestigt ist ein Bedienfeld 7b mit Steuer- bzw. Bedienelementen 8. Dieses ragt auf einer bodenplattenseitigen Stirnseite des Aufbaus 2 aus dem Aufbau heraus, verdeckt und schirmt die Traversenschiene 21 ab und bildet eine "Bedienerseite" der Maschine 1, von welcher aus ein Bediener die Maschine 1 steuert, wie weiter unten noch erläutert wird. Lediglich die Bestückung der Maschine 1, insbesondere der Reifenaufnahme 10 der Maschine 1, mit Reifen W findet auf einer anderen Seite, nämlich einer gegenüberliegenden Seite statt (Erläuterung hierzu unten). Zusammen bilden der Aufbau 2 und die Bodenplatte 3 im weitesten Sinne ein "L".

Die Bodenplatte 3, welche von der Größe (d. h. dem Grundriss, nämlich ca. 1600 x 1030 mm) her grob im Bereich der Größenordnung einer handelsüblichen Transportpalette liegt, umfasst bodenseitig Staplerschuhe 4, um sie mittels eines Hubwagens oder eines Gabelstaplers leicht transportieren, also z. B. in einen Transporter oder auf eine Ladefläche eines Lastkraftwagens (kurz "LKW") verladen, zu können. Zusätzlich umfasst die Bodenplatte 3 stirnseitig auf der dem Aufbau 2 gegenüberliegenden Stirnseite eine Öse 6, hier eine Schwerlastöse 6, um sie unabhängig davon befestigen, heben oder ziehen zu können. Diese Öse 6 kann auch dazu genutzt werden, eine demontierte Bodenplatte 3 vor dem Zusammenbau mit dem Aufbau 2 separat hochheben und transportieren zu können. Eine weitere solche Schwerlastöse 6 (um bei Bedarf ggf. auch den Aufbau separat transportieren zu können) befindet sich in etwa mittig auf der Oberseite des Aufbaus 2.

Insgesamt steht die Bodenplatte 3 im bestimmungsgemäß abgestellten Zustand auf vier in der Höhe individuell einstellbaren Füßen 5, um sie nach einer Anlieferung oder einem Aufbau vor Ort auf einer ebenen oder auch leicht unebenen Fläche auf einfache Weise entsprechend "im Wasser" lotrecht ausrichten zu können.

Im "Innenraum" zwischen den beiden Schenkeln des "L", also im Wesentlichen oberhalb der Bodenplatte 3 bzw. neben dem Aufbau 2 befindet sich der eigentliche Arbeitsbereich der Maschine 1. Auf diesen im Wesentlichen quaderförmigen "Arbeitsraum" sind sämtliche (auch die nachfolgend noch beschriebenen) Komponenten in ihrer Größe beschränkt, d. h. die Maschine 1 ist sehr kompakt aufgebaut und ragt (bis auf eine noch beschriebene Rampe 16) nicht über die Grundfläche bzw. den Umriss der Bodenplatte 3 samt seitlichem Aufbau 2 hinaus, so dass sie damit insgesamt wenig Platz einnimmt. Insbesondere auch der Reifen W erstreckt sich bei der Bearbeitung nicht über diesen Arbeitsbereich hinaus, denn er wird für die Bearbeitung nur aus einer Beladungs- bzw. Bestückungsposition (nicht dargestellt) auf der Bodenplatte 3 in eine angenehme, vorteilhafte Bearbeitungshöhe angehoben bzw. verfahren (siehe Figur 1). Hierzu befindet sich auch eine seitliche Rampe 16 an der Bodenplatte 3 gegenüber dem Bedienfeld 7b, um den Reifen W auf die Bodenplatte 3 zu rollen und wie gesagt in der Reifenaufnahme 10 zu befestigen. Sie ist mittels eines Scharniers 17 hoch- und herunterklappbar gestaltet. Damit steht die Rampe 16 im hochgeklappten Zustand nicht über die Bodenplatte 3 hinaus. Im heruntergeklappten Zustand (siehe Figur 1) kann über diese der Reifen W in einen muldenförmigen Zuführschlitten 12 der Reifenaufnahme 10 gerollt werden.

Der Zuführschlitten 12 ist relativ zur Bodenplatte 3 in der Bodenplatte 3 rollend gelagert und lässt sich in Breitenrichtung x in Richtung Aufbau 2 der Maschine 1 verschieben, um den Reifen W über eine entsprechend abgesenkte, aus dem Aufbau 2 herausstehende Antriebswelle 13 (siehe Figur 2) der Reifenaufnahme 10 zu stülpen, bis der Reifen W in einer hinteren Position nahe des Aufbaus 2 an einem Flansch der Antriebswelle 13 anschlägt. In dieser Position wird der Reifen W dann mittels einer Reifenfeststellschraube 15 der Reifenaufnahme 10 verdrehsicher befestigt bzw. gehalten.

Nach dem Nachschneidevorgang nach dem Herabsetzen und Lösen der Reifenfeststellschraube 15 des Reifens W kann der Reifen W mittels des Zuführschlittens 12 und der Rampe 16 wieder genauso leicht aus der Maschine 1 entnommen werden, ohne dass der Bediener hierzu körperlich über ein normales Maß hinaus tätig werden muss. Bei der Reifenfeststellschraube 15 handelt es sich um eine Reifenschnellspannmutter 15, welche sich besonders einfach und schnell verspannen und lösen lässt und daher besonders anwenderfreundlich ist.

Der Reifen W wird hier exakt so auf der Antriebswelle 13 der Reifenaufnahme 10 platziert, dass die Antriebswelle 13 mit der Rotationsachse A bzw. Antriebsachse A des Reifens W übereinstimmt. Damit lässt sich der Reifen W beliebig schnell drehen, indem die Antriebswelle 13 mithilfe von Antriebsmitteln 1 angetrieben wird, welche sich 1 innerhalb des Aufbaus 2 befinden.

Bei diesem Ausführungsbeispiel weist die Reifenaufnahme 10 Hubmittel 14 auf, welche die gesamte Antriebswelle 13 samt Reifen W anheben und absenken.

Grundsätzlich könnte die Reifenaufnahme alternativ aber auch an Stelle einer in der Höhenrichtung z bzw. Hubrichtung verstellbaren Antriebswelle Hubmittel in Form eines Scherenhubtisches auf dem Zuführschlitten aufweisen, mit welchen der Reifen erst auf eine Höhe der Antriebswelle gebracht wird und dann der Scherenhubtisch mit dem Zuführschlitten in Breitenrichtung nach hinten geschoben wird, so dass der Reifen wieder auf dieselbe Weise mit der Antriebswelle verbunden werden kann. Dieser nicht dargestellte Aufbau der Reifenaufnahme ist verhältnismäßig einfacher (und somit kostengünstiger), da nun mehr keine in der Höhe verstellbare Antriebswelle mehr benötigt wird, sondern vielmehr eine in einer geeigneten Höhe voreingestellte, d. h. statische, Antriebswelle ausreichend wäre.

Wie auch weiter unten noch beschrieben wird, steht lediglich der Bediener, welcher die Maschine 1 steuert und betätigt, in einem sich in Figur 1 seitlich schräg rechts neben dem Arbeitsbereich anschließenden erweiterten Arbeitsbereich am Bedienfeld 7b der Maschine 1. Das Bedienfeld 7b erstreckt sich hierzu wie erwähnt senkrecht aus dem Aufbau oberhalb der Bodenplatte 3 parallel dazu in einer geeigneten Höhe, so dass sich der Bediener der Maschine 1 weder bücken noch strecken muss, sondern die Maschine 1 bequem im Stehen (oder ggf. im Sitzen auf entsprechender Höhe) bedienen kann.

Zu den weiteren Komponenten der Maschine 1 zählt wie gesagt eine Schneidvorrichtung 20. Diese umfasst einen Schneidkopf 30 mit einem Messer 31 zum besagten Nachschneiden der Rillen R₁, R₂, R₃, R₄, R₅ des Reifens W sowie einer Abstützvorrichtung 35 zur Führung des Messers 31 in einer gewünschten Eindringtiefe bzw. Schnitttiefe in der Lauffläche T - so dass das Messer 31 stets gleichweit in die Laufflächenoberfläche T_{A} der Lauffläche T eindringt, also weder zu flach noch zu tief einschneidet und damit auch bei einem ungleichmäßigen Verlauf der Laufflächenoberfläche T_{A} der Lauffläche T eine gleichbleibend tiefe Rille R₁, R₂, R₃, R₄, R₅ entsteht bzw. erzeugt wird.

Wie weiter oben bereits kurz erwähnt, ist die Schneidvorrichtung 20 auf einem Schlitten 22 beweglich in einer Traversenschiene 21 zwischen Bediener und Reifen W gelagert. Der Schlitten 22 ist dazu formschlüssig mit der Traversenschiene 21 verbunden. Die Traversenschiene 21 ist dazu selbst fest im bzw. am Aufbau 2 verankert und weist als Teil der formschlüssigen Verbindung wie erwähnt eine Zahnstange 21z mit Zähnen auf, relativ zu denen Zahnräder 20z des Schlittens 22 der Schneidvorrichtung 20 verfahren werden können. Dieser Aufbau sorgt dafür, dass die Schneidvorrichtung 20 in Breitenrichtung x (bzw. parallel zur Rotationsachse A des Reifens W) gesteuert durch den Bediener verfahrbar ist.

Der in der Traversenschiene 21 in Längsrichtung verstellbare Schlitten 22 trägt wie zuvor erwähnt die Schneidvorrichtung 20 und damit indirekt auch den Schneidkopf 30 der Schneidvorrichtung 20.

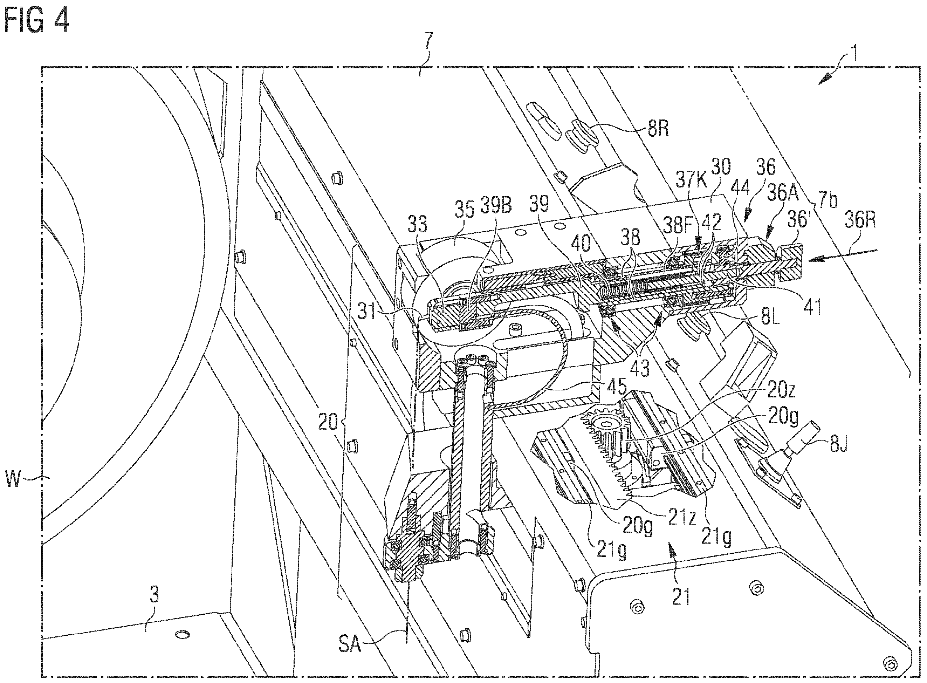

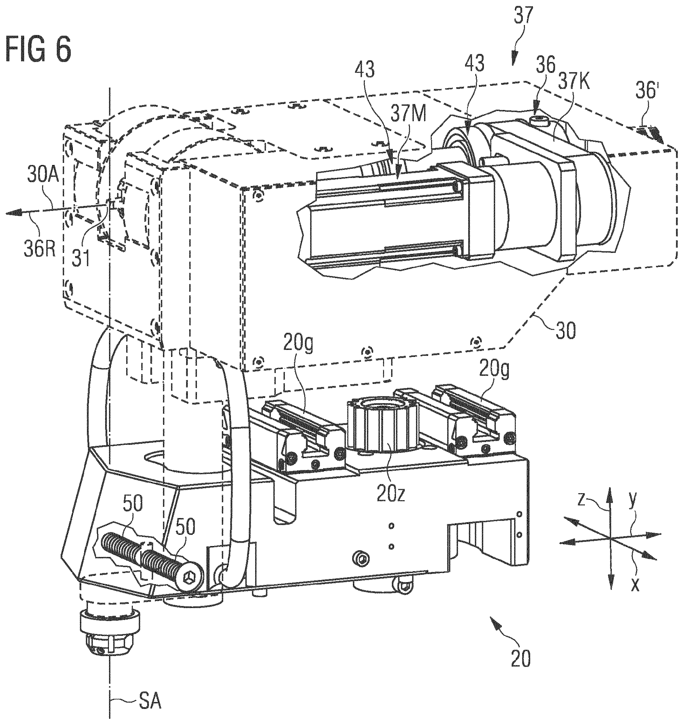

Der Schneidkopf 30 selbst wiederum (siehe Figuren 4 bis 6) ist relativ zur übrigen Schneidvorrichtung 20, d. h. einem unteren (in Figur 6 der gestrichelt dargestellten) Teil der Schneidvorrichtung 20, um eine Schwenkachse SA in einem Winkelbereich um eine mittlere Neutralstellung S₀ des Messers 31 des Schneidkopfs 30 drehbar gelagert.

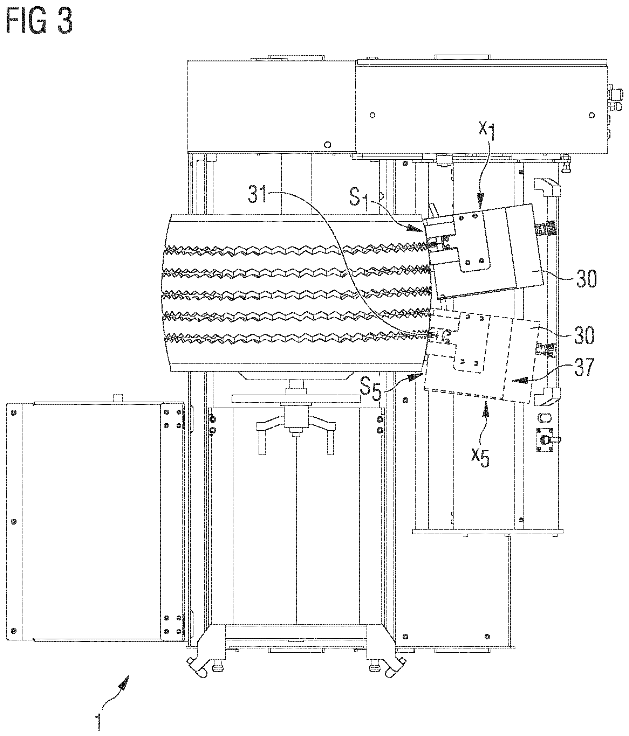

Der Schneidkopf 30 der Schneidvorrichtung 20 (wie er in Figur 4 vergrößert dargestellt ist) ist mit seinem Messer 31 dem Reifen W zugewandt. In Figur 2 und 3 sind drei unterschiedliche Positionen beispielhaft x₄, x₃, x₅ gezeigt. Diese sollen die unterschiedliche Neigung des Schneidkopfes 30 mit dem Messer 31 relativ zur übrigen Schneidvorrichtung 20 durch Rotation um die Schwenkachse SA der Schneidvorrichtung 20 angepasst an die lokale Wölbung des Reifens W veranschaulichen, da diese Neigungsanpassung automatisch durch die Abstützvorrichtung 35 der Schneidvorrichtung 20 am Schneidkopf 30 beim Heranfahren der Schneidvorrichtung 20 an den Reifen W erfolgt.

Die in Figur 2 dargestellte mittlere Neutralstellung S₀ des Schneidkopfes 30 stellt einerseits eine "neutrale Ausgangsstellung" dar, in welche der Schneidkopf 30 stets mithilfe von hier zwei Federelementen 50 (siehe Figur 6) im kontaktlosen Zustand, d. h. ohne Druck- Abstützkontakt zum Reifen W, zurückgefedert wird.

Die Federelemente 50 sind (auf einer reifenabgewandten Seite der Schwenkachse SA) in eigens dafür ausgebildeten, sich in Breitenrichtung x parallel zur Rotationsachse A des Reifens W durch den unteren Teil der Schneidvorrichtung 20 erstreckenden Durchgangsbohrungen angeordnet und dabei jeweils auf einer gegenüberliegenden Seite eines (gestrichelt dargestellten) Anschlagelements des Schneidkopfs 30 (oberer Teil der Schneidvorrichtung 20) in Breitenrichtung x vor und hinter dem Anschlagelement positioniert. Konkret handelt es sich hier bei dem Anschlagelement um einen zylindrischen Stift an dessen Mantelfläche bzw. Mantelaußenseiten die Federelemente 50 (hier z. B. als Spiralfedern ausgebildet) federnd anstehen. Die Federkraft der Federelemente 50 kann mittels jeweils eines Stellelements, hier z. B. einer Schraube mit Gewinde, präzise eingestellt werden, indem die Federelemente 50 in Längsrichtung mehr oder weniger stark von gegenüberliegenden Seiten gegen den Stift gedrückt werden. Damit lässt sich auch die Neutralstellung S₀ feineinstellen.

Andererseits wird diese mittlere Neutralstellung S₀ in der Regel auch beim Nachschneiden einer mittleren, zentralen Rille R₃ des Reifens W eingenommen (hier nicht dargestellt).

Die in Figur 3 dargestellten Schwenkstellungen S₁, S₅ (mit zur Rotationsachse A des Reifens W geneigtem Messer 31), wobei eine der Schwenkstellungen S₁, S₅ hier nur virtuell (und gestrichelt dargestellt) ist, da sich an der Traverse ja nur ein Schneidkopf 30 befindet, nimmt der Schneidkopf 30 jeweils gestützt durch die Abstützvorrichtung 35 ein, wenn er im Bereich der parallel dazu verlaufenden Rillen R₁, R₅ in horizontaler Richtung (d. h. hier in Tiefenrichtung y nach links) an den Reifen W angedrückt würde, um diese nachzuschneiden. Denn hier beschreibt der Reifen W, genauer gesagt die Laufflächenoberfläche T_{A} der Lauffläche T, eine leichte Wölbung, welche hier idealisiert dargestellt ist. In der Realität kann diese je nach Abnutzung und Druck im Reifen W auch ganz anders, z. B. deutlich unregelmäßiger ausgebildet oder leicht geneigt sein. Bei diesen Rillen R₁, R₅ handelt es sich hier beispielhaft um die beiden äußersten Rillen R₁, R₅ am nächsten an der jeweiligen Schulter des Reifens W. Deshalb ist der Schneidkopf 30 dort am meisten aus der Neutralstellung S₀ des Schneidkopfes 30 herausgeschwenkt. Bei der mittleren Rille R₃ steht der Schneidkopf 30 mit dem Messer 31 ziemlich exakt radial zum Reifen W (nicht dargestellt).

An dieser Stelle sei darauf hingewiesen, dass der Schneidkopf 30 im Gegensatz zum Stand der Technik dazu allerdings nicht extra in diese leicht verdrehte Position x₁, x₅ gesteuert werden muss. Vielmehr wird er wie zuvor erwähnt durch die Abstützvorrichtung 35 beim Heranfahren an die Lauffläche T im Moment des Kontakts mit der Laufflächenoberfläche T_{A} des Reifens W automatisch von selbst um die Schwenkachse SA in diese geneigte Position x₁, x₅ geschwenkt bzw. verschwenkt. Denn die Abstützvorrichtung 35 fährt die Laufflächenoberfläche T_{A} ab und neigt sich dadurch je nach Neigung der Oberfläche dementsprechend, so dass letztlich auch das daran gekoppelte Messer 31 auf sehr einfache Weise automatisch geeignet, d. h. senkrecht, zur Laufflächenoberfläche T_{A} ausgerichtet wird. Während eines Nachschneidevorgangs liegt also die (virtuelle) Schwenkachse SA immer tangential, vertikal in der Tangentialebene an der Laufflächenoberfläche T_{A} am Reifen W an.

Die Abstützvorrichtung 35, hier in Form zweier, neben dem Messer 31 befindlicher runder Abstützwalzen 35 ausgebildet, überträgt - wenn der Reifen W durch die Antriebsmittel 11 gedreht wird - kontinuierlich den Verlauf der Laufflächenoberfläche T_{A} entlang des Umfangs des Reifens W unmittelbar neben der nachzuschneidenden Rille R₁, R₂, R₃, R₄, R₅ auf das Messer 31. Mit anderen Worten wird das Messer 31 demzufolge in seiner Neigung kontinuierlich näherungsweise passend senkrecht zur aktuellen Laufflächenoberfläche T_{A} im Bereich der Rille R₁, R₂, R₃, R₄, R₅ selbst ausgerichtet. Dies ist aber für die Genauigkeit der Schnitttiefe völlig ausreichend. Damit die Schnitttiefe möglichst exakt der jeweiligen Laufflächenoberfläche T_{A} im Bereich der nachzuschneidenden Rille R₁, R₂, R₃, R₄, R5 angepasst ist, d. h. die Abstützwalzen 35 nur den Verlauf der Laufflächenoberfläche T_{A} unmittelbar neben der nachzuschneidenden Rille R₁, R₂, R₃, R₄, R₅ auf die Schnitttiefe des Messers 31 übertragen, sind die Abstützwalzen 35 bevorzugt etwas breiter als die Rillenbreite x_{R} einer der Rillen R₁, R₂, R₃, R₄, R₅, aber dünner als der Abstand x_{A} zwischen zwei benachbarten Rillen R₁, R₂, R₃, R₄, R₅.

Um die Schneidvorrichtung 20, insbesondere den Schneidkopf 35, in horizontaler Richtung bzw. Tiefenrichtung y senkrecht zur Rotationsachse A des Reifens W an die Lauffläche T heran- oder wegzufahren, weist die Maschine 1 Andruckmittel 23 bzw. Zugmittel 23 hier in Form eines pneumatischen Zylinders auf. Diese dienen auch dazu während des Schneidvorgangs dafür zu sorgen, dass die Abstützwalzen 35 dauerhaft in Druckkontakt mit der Lauffläche T stehen, damit diese die Neigung bzw. Wölbung der Laufflächenoberfläche T_{A} ideal auf das Messer 31 übertragen.

Die Andruckmittel 23 bzw. Zugmittel 23 befinden sich innerhalb des Aufbaus 2 und verfahren die gesamte Schneidvorrichtung 20 samt Traversenschiene 31 relativ zum Reifen W sowie relativ zum Bedienfeld 7b. Dafür ist entlang des Aufbaus 2 ein horizontaler Schlitz vorgesehen.

Insgesamt wird damit das Messer 31 bezogen auf die Laufflächenoberfläche T_{A} stets in der richtigen Schnitttiefe bzw. Tiefe gehalten sowie in dieser Tiefe bleibend durch die Lauffläche T des Reifens W geführt. Somit entstehen nahezu perfekte gleichmäßig tiefe Rillen R₁, R₂, R₃, R₄, R₅, selbst wenn der Reifen W abschnittsweise unterschiedlich stark abgefahren und/oder gewölbt sein sollte. Denn im Vergleich zu Neureifen können abgefahrene Reifen W durchaus starke Abweichungen von der ursprünglichen Form aufweisen, z. B. durch unterschiedlich starken Bremsabrieb oder einseitige Belastung, etc. Beispielsweise können die Reifen einseitig zu einer Reifenschulter mehr abgenutzt sein oder in der Mitte stärker abgefahren sein als zu den Reifenschultern hin.

Wie in Figur 4 zu sehen, umfasst der Schneidkopf 30 zur Einstellung der Schnitttiefe des Messers 31 einen manuell einstellbaren Schnitttiefeneinsteller 36 mit einem Stellrädchen 36'. Mit diesem kann der Bediener den axialen Überstand des Messers 31 in einer Schnitttiefenrichtung 36R gegenüber den Abstützwalzen 35 entlang einer Schneidkopfachse 30A des Schneidkopfes 30 einstellen. Die Schneidkopfachse 30A erstreckt sich in Längsrichtung des Schneidkopfes 30 vom hinteren bedienerseitigen Ende des Schneidkopfes 30 am Bedienfeld 7b der Maschine 1 bis zum Messer 31. Für eine bequemere Einstellung der Schnitttiefe umfasst der Schnitttiefeneinsteller 36 dazu beispielsweise einen digitalen Stellungsanzeiger 36A, welcher die aktuell eingestellte Schnitttiefe anzeigt.

Der Schneidkopf 30 umfasst zudem eine Wellen-Konstruktion 38, 39 mit mehreren Wellen 38, 39, nämlich mit einer äußeren Hohlwelle 38 und einer innenliegenden bzw. inneren Hohlwelle 39 (siehe Figur 4). In der innenliegenden Hohlwelle 39 ist wiederum eine Schraubenfeder 40 gelagert, in die sich eine Gewindestange 41 hinein erstreckt. Auf der Gewindestange 41 läuft innerhalb der innenliegenden Hohlwelle 39 ein mittels der Gewindestange 41 in Längsrichtung der inneren Hohlwelle 39 verstellbarer Kulissenstein 42 (mit Innengewinde), mit dem die Schraubenfeder 40 und darüber dann die ganze innere Hohlwelle 39 nach vorne (in Richtung zum Reifen W) gedrückt werden kann. Damit lässt sich das Messer 31 relativ zu den seitlichen Abstützwalzen 35 weiter heraus in Schnitttiefenrichtung 36R zum Reifen W oder zurück weg vom Reifen W verstellen, d. h. ein Überstand relativ zu den Abstützwalzen 35 und damit eine Schnitt- bzw. Eindringtiefe des Messers 31 in die Lauffläche T des Reifens W regulieren. Dazu ist an einem schraubenfederfernen Ende der Gewindestange 41 über ein Verbindungsstück indirekt das Stellrädchen 36' des Schnitttiefeneinstellers 36 verdrehsicher daran befestigt, so dass der Bediener durch Drehen des Stellrädchens 36' die Gewindestange 41 drehen kann und dabei die Position des Kulissensteins 42 auf der Gewindestange 41 verändert, womit wie erwähnt über die Schraubenfeder 40 das Messer 31 in Schnitttiefenrichtung 36R zum Reifen W oder weg vom Reifen W verstellt wird. Die jeweilige Schnitttiefeneinstellung ist im Übrigen über eine Prisma-Nut und Druckschraube 44 am bedienerseitigen Ende der äußeren Hohlwelle 39 gegenüber dem Stellrädchen 36' des Schnitttiefeneinstellers 36 gesichert.

In Schnitttiefenrichtung 36R zum Reifen W befindet sich endseitig an der inneren Hohlwelle 39 ein Messerblock 39B, welcher einteilig mit der inneren Hohlwelle 39 ausgebildet ist und an welchem eine Messerklemme 33 für das Messer 31 angeordnet ist. Die Messerklemme 33 ist reifenseitig am Messerblock 39B montiert und dient zum Halten bzw. Einklemmen des Messers 31. Bei einem Defekt des Messers 31 wird die Messerklemme 33 gelöst und das Messer 31 durch ein neues intaktes Messer 31 ersetzt.

Die oben erwähnte Drehung bzw. Schwenkung des Messers 31 mit dem Schnittrichtungs- bzw. Schnittwinkeleinsteller 37 um die Schneidkopfachse 30A wird durch die beschriebene mehrteilige Wellen-Konstruktion 38, 39 (siehe Figur 4) realisiert, an welcher an der reifenzugewandten Stirnseite wie erwähnt die Messerklemme 33 für das Messer 31 angeordnet ist.

In einem vom Messer 31 entfernten Endbereich ist die äußere Hohlwelle 38 umseitig in zwei Rillenkugellagern 43 in einer Aufnahme im Schneidkopf 30 drehbar gelagert. Im Wesentlichen im Bereich der beiden Rillenkugellager 43 weisen die innere Hohlwelle 39 und die äußere Hohlwelle 38 jeweils eine Längsnut auf, in welcher ein passendes längliches Passfederelement 38F sitzt, welches die beiden Wellen 38, 39 gegeneinander verdrehsichert. Über diese Verbindung dreht sich die innenliegende Hohlwelle 39 (und damit das Messer 31), wenn die äußere Hohlwelle 38 über einen Keilriemen 37K durch einen Schrittmotor 37M des Schnittrichtungs- / Schnittwinkeleinstellers 37 angetrieben wird, um das Messer 31 gegen bzw. mit dem Uhrzeigersinn in einem gewünschten Dreh- bzw. Schwenkwinkelbereich um die Schneidkopfachse 30A hin und her zu schwenken.

Dieser Drehwinkelbereich ergibt sich aus den Rillendaten zum jeweiligen gewünschten Rillenmuster bzw. wird von der Steuervorrichtung 9 daraus berechnet. Eine gerade verlaufende Längsrille entsteht beispielsweise, wenn der Dreh- bzw. Schwenkwinkel in einem zentralen Nullwinkel arretiert wird und somit das Messer 31 während des gesamten Schneidvorgangs in einer geraden Ausrichtung verbleibt, also nicht geschwenkt wird. Mit anderen Worten braucht in diesem speziellen Fall der Schnittwinkeleinsteller 37 nicht zu arbeiten. Eine Zickzack-Rille R₁, R₂, R₃, R₄, R₅ entsteht beispielsweise, wenn das Messer 31 wechselweise zwischen zwei maximalen Winkelstellungen des Winkelbereichs hin- und hergeschalten bzw. geschwenkt wird und dabei zeitgleich die Schneidvorrichtung 20 mit dem Schneidkopf 30 parallel zur Rotationsachse A des Reifens W in Breitenrichtung x mit derselben Frequenz mit einer (Schwingungs-)Amplitude in der Breite x_{R} der betreffenden Zickzack-Rille R₁, R₂, R₃, R₄, R₅ hin- und herbewegt bzw. verfahren wird - während der Reifen W senkrecht dazu um die Rotationsachse A angetrieben wird und das Messer 31 in der eingestellten Schnitttiefe die Zickzack-Rille R₁, R₂, R₃, R₄, R₅ einschneidend durch die Lauffläche T des Reifens W gezogen (bzw. der Reifen W relativ zum Messer 31 bewegt) wird. Das besagte Hin- und Herschwenken des Messers 31 wird wie erwähnt über den mittels des Schrittmotors 37M angetriebenen Keilriemen 37K bewerkstelligt. Wird dabei sehr schnell zwischen den Winkelstellungen gewechselt und der Schneidkopf 30 nur minimal in Breitenrichtung x hin- und herbewegt, entsteht ein eher "kurzes", schmales Zick-Zack-Muster, wird länger gewartet, entsteht ein eher "langgezogenes", ggf. breites Zick-Zack-Muster mit längeren Zacken. Die Rillenbreite x_{R} bestimmt sich dabei durch die Amplitude der Bewegung in Breitenrichtung x. Durch ein nicht-periodisches Verschwenken können auch andere ungleichmäßige Rillenmuster geschnitten werden.

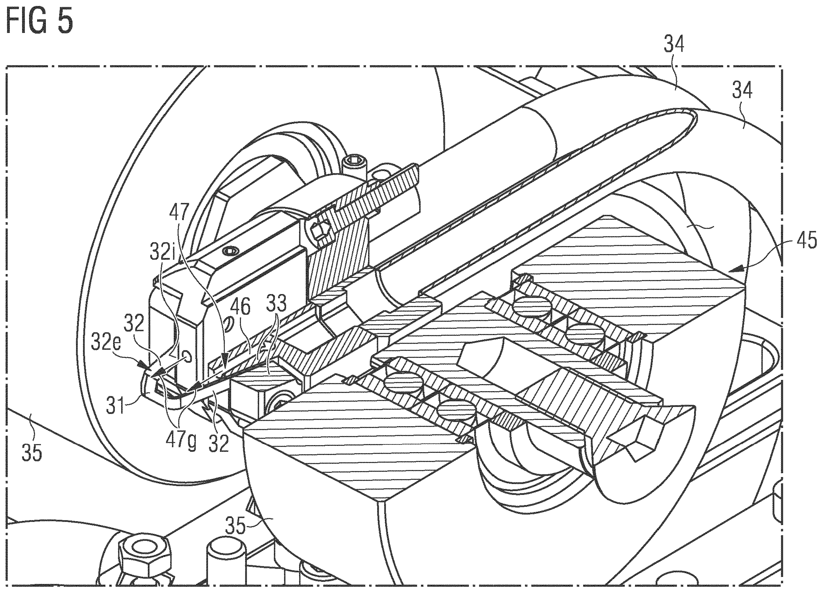

Wie besonders gut in Figur 5 zu erkennen ist, ist das Messer 31 hier u-förmig mit zwei vom Reifen W weglaufenden (bzw. wegweisenden) Schenkeln 32 ausgebildet, welche mittels Schrauben in der Messerklemme 33 gehalten werden. Um mit dem Messer 31 möglichst schonend den Reifen W schneiden zu können, wird das Messer 31 mittels Strom aus einem Stromanschluss 34 aufgeheizt, so dass es den Gummi des Reifens W beim Durchfahren leicht anschmilzt und damit mit erheblich weniger Widerstand hindurchgleitet.

Wie vor allem in Figur 4 (sowie auch in Figur 5) zu sehen ist, besteht eine Möglichkeit zur Reduzierung des Verschleißes des Messers 31 beim Schneiden darin, dass Messer 31 mit einem gerichteten Gasstrom 47g, hier z. B. einem einfachen Luftstrom 47g zu beaufschlagen. Dazu befinden sich hier in Figur 4 zwischen den Schenkeln 32 des Messers 31 im inneren Teil der Messerklemme 33 sowie dem Messerblock 39B zwei Luftauslässe 47 eines Kühlkanals 46 einer Kühlvorrichtung 45, welche so ausgebildet und ausgerichtet sind, dass der daraus hinausströmende Gasstrom 47g bzw. Luftstrom 47g auf die beiden Schenkelinnenseiten 32i der Schenkel 32 des Messers 31 gerichtet ist. Konkret ist der Gasstrom 47g vorteilhafterweise auf die Eintauchstellen 32e der Schenkelinnenseiten 32i der Schenkel 32 in den Reifen W gerichtet, damit das Messer 31 möglichst effektiv am aus dem Reifen W herausstehenden Messerteil nahe am Reifen W gekühlt wird. Damit erhöht sich die Standzeit des Messers 31, d. h. die Zeit, während derer mit dem Messer geschnitten werden kann, ohne dass erhebliche Verschleißerscheinungen auftreten. Indem der Messerteil, der sich während des Schneidprozesses nicht im Reifen befindet, zusätzlich mittels einer Luftkühlung gekühlt wird, können auch höhere Ströme genutzt werden, mit denen sich das Gummi noch leichter mit weniger Widerstand schneiden lässt. Dann würde das Messer auch trotz der relativ hohen Ströme (100 bis 200 Ampere bei ca. 2 bis 4 Volt Spannungen) nicht nach ein paar Sekunden (im einstelligen bis niedrigen zweistelligen Bereich, vielleicht nach 5 Sekunden) verglühen, wenn es während des Schneidens mit einem hohen Strom beaufschlagt wird und somit besonders stark erhitzt wird. Der Teil des Messers, der sich im Gummi befindet, wird während des Schneidens durch das permanent durchgleitende neue Gummi gekühlt.

Weiter gehört zu den Hauptkomponenten der Maschine 1 eine Steuervorrichtung 9, welche die Maschine 1 anhand der getätigten bzw. eingestellten Parameter halbautomatisch steuert, so dass der Bediener weitestgehend nur noch eine steuernde bis überwachende Funktion einnimmt, ohne dabei nennenswerten körperlichen Belastungen ausgesetzt zu sein.

Die Steuerung kann elektronisch aufgebaut sein, d. h. mit entsprechenden Schnittstellen zu den erforderlichen mechanischen, hydraulischen und/oder pneumatischen Aktoren. Es handelt sich bevorzugt um eine Sicherheits-SPS-Steuerung (i. W. elektrische Manipulationssicherung), welche alle mechanischen, hydraulischen und pneumatischen Aktoren in Abhängigkeit voneinander abfragen und bewegen bzw. steuern kann.

Mit der zuvor beschriebenen Konstruktion ist sichergestellt, dass die noch vorhandene Restreifendicke des Reifens W nahezu vollständig bis zur Karkasse des Reifens W ausgenutzt werden kann, ohne dabei das Risiko eingehen zu müssen, dass die Karkasse tatsächlich beschädigt wird.

Zudem sorgt die Konstruktion für eine verbesserte Schnittqualität, bei gesteigerter und gleichbleibend hoher Produktivität, ohne Einbußen aufgrund von Ermüdung und/oder nachlassender Konzentration hinsichtlich der einschlägigen Belastung des Arbeiters, der damit befasst ist. Bisher führen diese Nachteile leider nach wie vor noch dazu, dass viel Gummimaterial verschwendet wird, da die Reifen, nachdem das ursprüngliche Profil einmal abgefahren wurde, nicht mehr weiter genutzt werden können und als Altreifen ausrangiert werden.

Im Folgenden wird nun ein beispielhafter Ablauf des Nachschneidens des Profils P des Reifens W mit der erfindungsgemäßen Maschine 1 beschrieben.

Der Ablauf unterteilt sich dabei in vier Hauptabschnitte, nämlich
(a) die Eingabe der Reifenparameter des Reifens W am Bedienfeld 7b, z. B. an einem Bedienpanel 9a mit Display,
(b) die Bestückung der Reifenaufnahme 10 mit dem Reifen W,
(c) die Vorbereitung für den weiteren Automatikbetrieb (Einrichten) und
(d) den automatisch betriebenen Nachschneidevorgang selbst (Automatikbetrieb), sowie etwaige
(e) Sonderfälle, die jederzeit auftreten können.

(a): Wie gesagt werden zunächst am Bedienpanel 9a die Reifenparameter, welche der Bediener in der Regel an einer Flanke des Reifens W ablesen und ggf. unter Nutzung von weiteren Daten des Herstellers zum Reifentyp ergänzen kann, in das Bedienpanel 9a eingetragen. Sind diese Daten einmal eingetragen, können sie für zukünftige Einsätze in einer entsprechenden Liste für Reifentypen gespeichert werden und fortan aus der Liste (welche werksseitig schon mit einer Auswahl an Standard-Reifentypen ausgestattet sein kann) ausgewählt werden. Anhand des vorhandenen Schnittmusters wird entschieden, welches Schnittmuster nachgeschnitten wird. In der Regel bietet es sich an, sich nach dem vorhandenen Schnittmuster zu richten und dasselbe oder zumindest ein ähnliches Schnittmuster erneut einzuschneiden. Dazu können verschiedene Schnittmuster als Vorlage abgespeichert und/oder aus vorhandenen werksseitig eingespeicherten Vorlagen ausgewählt werden. Konkret handelt es sich bei den Reifenparametern sowie den Schnittmusterdaten u. a. um den Reifendurchmesser, die Rillenanzahl, die Rillenbreiten (parallel zur Rotationsachse des Reifens W), ggf. die Rillenlängen (azimutale Länge), ggf. die Gesamt-Rillenlänge sowie ggf. das Rillen-Längenverhältnis.

Die Steuervorrichtung 9 kann dazu werksseitig oder durch den Bediener selbst im Zuge von Firmware-Updates aktualisiert werden. Dabei können z. B. die gängigsten Reifentypen samt zugehöriger Reifenparameter in das Bedienpanel 9a der Steuervorrichtung 9 eingegeben oder über eine Schnittstelle in eine Speichereinheit der Steuervorrichtung 9 geladen werden, so dass diese nur noch ausgewählt werden müssen. Dies kann je nach Ausstattungsstufe über die handelsüblichen Datenübertragungsmöglichkeiten geschehen, wie zum Beispiel via USB, Bluetooth, W-LAN oder Ähnliches.

Vorzugsweise kann daher eine Vorlage eines Schnittmusters für ein Zackenmuster zumindest folgende Parameter umfassen:
- Reifendurchmesser (RD in mm),
- Zackenanzahl pro Rille (ZX in Stück),
- Zackenbreite 1 (ZB1 in mm),
- Zackenbreite 2 (ZB2 in mm),
- Zackenlänge 1 (H1 in mm),
- Zackenlänge 2 (H2 in mm),
- Gesamt-Zackenlänge (ZH in mm; ZH = H1 + H2) und
- Zacken-Längenverhältnis (V = H1 / H2).

Bei einer Vorlage eines geradlinigen Schnittmusters sind diese Parameter alle gleich Null, d. h. es entsteht eine gerade Längsrille.

(b): Die Bestückung der Reifenaufnahme 10 mit dem Reifen W umfasst das Vorpositionieren der Antriebswelle 13 der Reifenaufnahme 10 in eine passende Höhe in Höhenrichtung z bzw. Hubrichtung. Anschließend wird der Reifen W auf den Zuführschlitten 12 gerollt und der Zuführschlitten 12 mit dem Reifen W in Breitenrichtung x auf die Antriebswelle 13 geschoben. Nun wird die Reifenfeststellschraube 15, hier wie erwähnt als Reifenschnellspannmutter 15 ausgeführt, positioniert und passend auf die Antriebswelle 13 gesteckt und mittels Schnellspannfunktion arretiert bzw. festgespannt.

Daraufhin wird der Reifen W auf bzw. in die Startposition verfahren. Eine solche Startposition ist beispielsweise die Position x₃ in Figur 2. Dazu wird der Reifen W hier z. B. mittels eines Pneumatikantriebs im Aufbau 2 pneumatisch bis in eine Bearbeitungshöhe angehoben. Hat der Reifen W die obere Endlage bzw. Bearbeitungshöhe erreicht, schaltet sich praktischerweise nach einer Sekunde die Selbsthaltung ein, so dass der Reifen W auch bei einem ungeplanten Ausfall des Pneumatikventils des Pneumatikantriebs nicht zusammen mit der Antriebswelle unkontrolliert herabsausen kann. Hierzu ist als zusätzliche Sicherung ein entsperrbares Drosselrückschlagventil verbaut. An dieser Stelle sei erwähnt, dass alternativ oder zusätzlich zum pneumatischen Antrieb grundsätzlich auch ein hydraulischer Antrieb realisiert sein kann. Der pneumatische Antrieb ist hier bevorzugt, da er die günstigere, weniger anfällige Variante darstellt, und sich beispielsweise auch mittels eines Kompressors mit einem einfachen 230V-Stromanschluss betätigen lässt.

Aus Sicherheitsgründen kann die Steuerung der Maschine darüber hinaus so eingerichtet sein, dass ein Verfahren bzw. Bewegen beliebiger Komponenten in Höhenrichtung z und/oder in Breitenrichtung x nur dann möglich ist, wenn ein sogenannter Zustimmtaster 8R als ein Steuerelement 8 am Bedienfeld 7b permanent gedrückt wird, während mit einem weiteren (davon beabstandeten) Joystick 8J gesteuert wird. Zur bequemeren Verstellbarkeit kann der Joystick 8J in zwei Geschwindigkeitsstufen, nämlich in einer vergleichsweise langsamen Geschwindigkeit für eine Feinjustierung sowie in einer deutlich schnelleren Geschwindigkeit für die Überbrückung weiterer Verfahrstrecken betätigt werden. Bei der Positionierung in die Position x₃ wurde hier das Messer 31 am Schneidkopf 30 entlang der Breitenrichtung x bis in eine zentrale Position vorgelagert zur mittleren Rille R₃ vorpositioniert. Hierbei hilft ein Laser (nicht dargestellt), welcher im Schneidkopf 30 integriert ist. Dieser zeigt dem Bediener optisch die Mittelachse bzw. Schneidkopfachse des Messers 31 auf dem Reifen W bzw. der Lauffläche T des Reifens W an (damit der Bediener die Position des noch im Abstand zum Reifen W befindlichen Messers 31 bei der Vorpositionierung nicht peilen bzw. abschätzen muss, sondern direkt sieht, wo das Messer 31 relativ zum Reifen W zu positionieren ist), wenn dieser das Messer 31 passend zur betreffenden Rille R₁, R₂, R₃, R₄, R₅, hier z. B. der Rille R₃ in einem gewissen Abstand vorpositioniert. Damit kann dann im Zuge des weiter unten beschriebenen Automatikprozesses (d) bei Betätigung der beiden Zustimmtaster 8L, 8R der Eintauchvorgang sowie der anschließende Schneidprozess durch die Maschine 1 automatisiert durchgeführt werden. Wird einer der Zustimmtaster 8L, 8R, z. B. der rechte Zustimmtaster 8R, losgelassen, stoppt die Maschine 1 sofort. Damit wird sichergestellt, dass ein Bediener sich nicht die Finger einklemmen kann, während Teile der Maschine 1 in Bewegung sind bzw. verfahren werden.

(c): Die Vorbereitung für den Automatikprozess umfasst einerseits einen Prüfschritt und andererseits einen Messschritt. Im Prüfschritt werden die Voraussetzungen für den späteren Nachschneidevorgang geprüft. D. h., grundsätzlich wird zunächst einmal überprüft, ob der Reifen W überhaupt nachschneidbar ist, er also die entsprechende Kennzeichnung aufweist. Erst dann wird der Reifen W auf etwaige Verunreinigungen im Profil gecheckt, welche - sofern vorhanden - dann entsprechend entfernt werden. Im Zuge dessen können besonders verschlissene bzw. beschädigte Reifen W direkt vorab aussortiert werden.

Im anschließenden Messschritt wird zunächst die Tiefe der einzelnen Rillen separat in 90°-Schritten gemessen und notiert bzw. im Bedienpanel eingegeben. Hierzu kann beispielsweise (ggf. unterstützend) ein analoger Initiator bzw. induktiver Sensor eingesetzt werden, welcher die Karkassentiefe induktiv misst und mit dem sich dadurch die Schnitttiefe ermitteln lässt. Das Messen mittels des analogen Initiators bzw. induktiven Sensors kann manuell oder ggf. halbautomatisch erfolgen. Anschließend wird entsprechend der Herstellervorgabe die passende Nachschneidtiefe auf den niedrigsten gemessenen Wert aufaddiert. In der Regel handelt es sich hierbei um 3 bis 4 mm Tiefe.

An dieser Stelle sei bemerkt, dass es auch Reifen gibt, bei denen die absolute Nachschneidetiefe direkt an sogenannten Messbohrungen im Profil gemessen werden kann. Auch hier wird allerdings in 90°-Schritten gemessen und der kleinste Wert verwendet. Diesbezüglich ist es denkbar, dass dieser Schritt in der weiteren Entwicklung der Maschine 1 ebenfalls noch automatisiert wird, d. h. beispielsweise die Messbohrungen mittels eines Lasers, Messschiebers etc. gemessen werden, um die vorhandene Profiltiefe automatisiert in 90° entlang der Lauffläche des Reifens W zu messen.

Wenn beispielsweise entlang einer Rille bei 0°, 90°, 180° und 270° folgende vier Profiltiefen 7, 6, 5 und 6 mm gemessen werden, wird die Schnitttiefe bei einer Herstellervorgabe von 4 mm auf einen Wert von 9 mm eingestellt (5 mm + 4 mm = 9 mm).

Entsprechend wird die Schnitttiefe auf den errechneten Wert der ersten Rille R₁ eingestellt. Nun wird, sofern das Messer 31 noch nicht in einer ersten Startposition gegenüber der ersten Rille R₁ positioniert ist, die Schneidvorrichtung 20 mit dem Schneidkopf 30 (bei einer Zick-Zack-Rille) so mittels des erwähnten Joy-Sticks verfahren, dass eine vertikale Mittelachse des Messers 31 des Schneidkopfes 30 mittig auf der ersten (beliebig) linken Zackenposition der Rille angeordnet ist. Weiter wird auch die horizontale Mittelachse des Messers 31 mittig auf den Anfangspunkt der ersten linken Zacke ausgerichtet bzw. gefahren. Hierzu wird der Reifen W um die Antriebsachse A gedreht. Dabei wird die Schneidvorrichtung 20 mit dem Schneidkopf 30 samt Messer 31 mittels der Andruck- bzw. Zugmittel 23 der Maschine 1 oder alternativ händisch an den Reifen W herangefahren bzw. -geschoben. (d): Die Maschine kann so ausgebildet sein, dass zum Starten und Aufrechterhalten des Automatikbetriebs wie bereits erwähnt dann beide Zustimmtaster 8L, 8R (nämlich der besagte Zustimmtaster 8R rechts sowie ein weiterer Zustimmtaster 8L links, hier neben dem Joystick 8J) gedrückt gehalten werden müssen. Diese können aus Sicherheitsgründen voneinander zumindest soweit beabstandet sein, dass ein Bediener sie nicht gleichzeitig mit einer Hand gemeinsam betätigen kann, selbst wenn er dies wollte.

Durch erstmaliges Drücken der beiden Zustimmtaster 8L, 8R für den Start des Automatikbetriebes an einer jeweiligen Rille R₁, R₂, R₃, R₄, R₅ wird der Startpunkt gespeichert. Gleichzeitig wird die Schneidvorrichtung 20, d. h. zum einen die Abstützwalzen 35 und zum anderen das Messer 31 dazwischen, mittels der Andruckmittel bzw. Zugmittel 23 automatisch in Tiefenrichtung y gegen den Reifen W gedrückt, also an die Lauffläche T herangefahren. Dabei wird das Messer 31 mittels der gefederten Lagerung in Schnitttiefenrichtung 36R leicht eingefedert. Zudem wird der Reifen W mit der Antriebswelle 13 langsam angetrieben und zugleich das Messer 31 unter Strom gesetzt und damit aufgeheizt. Ferner wird - sofern vorhanden - auch die Messerkühlung, d. h. die Kühlvorrichtung 45 aktiviert und der Gasstrom 47g bzw. Luftstrom 47g strömt durch die Luftauslässe 47 auf die Schenkelinnenseiten 32i des Messers 31 an die Eintauchstellen 32e der Schenkel 32 des Messers 31 in den Reifen W, so dass das Messer 31 (speziell der aus dem Reifen W herausstehende Messerteil des Messers 31) konstant auf einer gewünschten, idealen Temperatur gehalten wird.

Durch die eben erwähnte gefederte Lagerung steht das Messer 31 zu anfangs des Eintauchvorgangs in leichtem Druckkontakt mit der Lauffläche T, womit es - wenn in diesem Moment auch der Reifen W angetrieben sowie das Messer 31 geheizt wird - im Zuge der azimutalen Relativbewegung zum Reifen W langsam in die Lauffläche T des Reifens W eintaucht bzw. einschneidet. Im weiteren Verlauf wird das Messer 31 durch die Federkraft der Schraubenfeder 40 bis zur Entlastung der Schraubenfeder 40 in die vorgesehene Schnitttiefe in die Lauffläche T eingedrückt, womit der Automatikschneidprozess die gewünschte Tiefe erreicht hat.

Wird nun einer der Zustimmtaster 8L, 8R losgelassen, stoppt die Maschine 1. Werden wieder beide Zustimmtaster 8L, 8R betätigt, fahren der Reifen W und die Maschine 1 wieder an. So ist im Normalfall ein sehr sicherer Betrieb gewährleistet. Sobald der Reifen W um 360° gedreht wurde, wird die Startposition gelöscht. Ebenfalls gelöscht wird die Startposition im Übrigen z. B. dann, wenn die Schneidvorrichtung 20 in Breitenrichtung x oder in Tiefenrichtung y manuell mittels des Joysticks 8J verfahren wurde. Dies ist z. B. dann der Fall, wenn der Bediener das Messer 31 auf die nächste noch nicht nachgeschnittene Rille R₁, R₂, R₃, R₄, R₅ vorpositioniert bzw. einstellt.

An dieser Stelle sei darauf hingewiesen, dass das Messer 31 um eine Rille R₁, R₂, R₃, R₄, R₅ abzuschließen in der Regel noch etwas, d. h. einige Grad, über die vollen 360° hinaus entlang der Lauffläche T weitergefahren wird, damit der Winkelbereich zu anfangs eines Umlaufs im Bereich des Startpunkts, an dem das Messer 31 erst nach ein paar Grad in die vollständige gewünschte Tiefe in der Lauffläche T eingetaucht ist, noch mit umfasst ist. Durch diesen Überlapp ist sichergestellt, dass auch dort die gewünschte Schnitttiefe nachgeschnitten bzw. vorhanden ist.

Ist die erste Rille R₁ fertiggestellt, wird das Messer 31 händisch vom Reifen W weg gezogen oder alternativ (sofern die Maschine 1 mit den entsprechenden motorisch steuerbaren Elementen ausgestattet ist) im Handbetriebsmodus (der nach jedem Rillen-Schnitt automatisch aktiv ist) per Knopfdruck vom Reifen W weg gefahren. Danach kann das Messer 31 in Breitenrichtung x bzw. entlang der X-Achse der Maschine 1 auf die nächste Rille R₂, R₃, R₄, R₅, hier beispielsweise die Rille R₂, vorpositioniert werden und die Startposition dieser Rille R₂ eingerichtet werden.

Ist der Startpunkt der nächsten Rille, hier der z. B. Rille R₂ eingerichtet, d. h. das Messer 31 durch den Bediener händisch oder bei motorischer Verstellbarkeit per Joystick 8J durch entsprechende Steuerbefehle an der zweiten Startposition vorpositioniert, werden wieder beide Zustimmtaster 8L, 8R betätigt und der Automatikbetrieb beginnt von Neuem.

Anschließend ziehen die Zugmittel 23 (hier z. B. der pneumatische Zylinder) die gesamte Schneidvorrichtung 20 bzw. den gesamten "Messerschlitten" wieder in Tiefenrichtung y bzw. in y-Richtung an den Reifen W heran. Das eigentliche Messer 31 wird dabei wieder in die Lauffläche T gedrückt und mittels der gefederten Lagerung leicht eingefedert. Nachdem der Reifen W wie bereits erwähnt um etwas mehr als 360° mit dem Messer 31 in der gewünschten Schnitttiefe gedreht worden ist, damit auch im Bereich der Eintauchstrecke (bei welcher die vollstände Schnitttiefe erst am Ende des Eintauchvorgangs erreicht ist) die gewünschte Profiltiefe bzw. Schnitttiefe eingeschnitten ist, ist auch diese Rille R₂ fertig geschnitten, so dass mit der nächsten Rille R₃ fortgefahren werden kann.

Damit z. B. hierbei nicht versehentlich ein Schaden an der Maschine 1 oder am Reifen W entstehen kann, kann die Schneidvorrichtung 20 auf einer reifenzugewandten Seite über einen Kollsionsschutzbügel verfügen, welcher selbst bei einem "Kontakt" mit dem Reifen W keine Schäden verursacht, jedoch unmittelbar bei "Kontakt" oder kurz vor Kontakt durch entsprechende Sensorik etc. eine Notbremsung auslöst und damit die im weiteren Verlauf potenziell zu einer Kollision führende Bewegung stoppt.

Die erwähnte Abfolge wird so oft wiederholt, bis alle Rillen R₁, R₂, R₃, R₄, R₅ des Reifens W nachgeschnitten sind. Abschließend werden dann sämtliche geschnittene Reifenprofile bzw. Profilreste, welche sich noch im Reifen W befinden, entfernt. Dies kann theoretisch auch außerhalb der Maschine 1 erledigt werden, z. B. per Hand. Dieser Schritt wird durch das saubere, maschinelle Nachschneiden mittels der Maschine 1 ebenfalls erheblich erleichtert, da durch den sauberen Schnitt in einem zusammenhängenden Schneidvorgang in der Regel, zumindest sofern der Schnitt nicht durch einen Messbruch etc. unterbrochen werden musste, das mit dem Messer 31 freigeschnittene Gummimaterial in einem Stück aus der betreffenden Rille R₁, R₂, R₃, R₄, R₅ entfernt bzw. herausgezogen werden kann.

Bei einem händischen Nachschneiden des Profils eines Reifens mittels einer herkömmlichen Schneidpistole muss demgegenüber in den allermeisten Fällen in mehreren Abschnitten entlang des Reifenumfangs geschnitten werden, zwischen denen das Messer jeweils neu angesetzt wird, da es zum einen häufig verkantet, zum anderen aber ansonsten auch die Gefahr besteht, dass es überhitzt. Außerdem muss es oft neu angesetzt werden, da es weit häufiger getauscht werden muss.

Sind alle Rillen R₁, R₂, R₃, R₄, R₅ fertig nachgeschnitten und die Gummimaterialreste aus den Rillen R₁, R₂, R₃, R₄, R₅ entfernt, läuft der oben beschriebene Prozess des Bestückens der Reifenaufnahme 10 mit dem Reifen W in umgekehrter Reihenfolge ab, um den Reifen aus der Maschine 1 zu entnehmen.

Dann kann im Anschluss idealerweise direkt der nächste Reifen aufgenommen werden, damit das Profil dieses Reifens nachgeschnitten werden kann. D. h. es beginnt der gesamte Ablauf wieder von vorne, zumindest insoweit es sich nicht um einen vollständig anderen Reifen handelt, das heißt, z. B. um einen Reifen eines anderen Typs etc. Handelt es sich um die übrigen Reifen desselben Fahrzeugs können einige Schritte des zuvor beschriebenen Ablaufs selbstverständlich auch entfallen, da in der Regel beispielsweise zumindest bereits der Reifentyp etc. feststeht. Dieser muss also z. B. nicht mehr bestimmt werden, wenngleich hier das Profil ganz anders abgefahren sein kann und somit der Messschritt natürlich nicht entfallen kann.

(e): Sonderfälle, die zu jeder Zeit auftreten können, sind beispielsweise ein Messerbruch des Messers 31 oder ein "Not-Aus" der Maschine 1 aus welchen Gründen auch immer.

Bricht zum Beispiel die Messerklinge des Messers 31 während des Nachschneidevorgangs hält die Maschine 1 an und fährt (z. B. bei einer Zick-Zack-Rille) selbstständig ein Zackenmuster zurück. Dabei müssen weiterhin beide Zustimmtaster 8L, 8R vom Bediener gedrückt werden. Daraufhin muss das gebrochene Messer 31 demontiert werden und ein neues Messer 31 montiert. Dazu wird die Schneidvorrichtung 20 in Tiefenrichtung y etwas vom Reifen W weggefahren. Sofern der abgebrochene Messerteil noch im Reifen W steckt, wird dieser im Zuge des Austauschs des verbliebenen Messerteils in der Messerklemme 33 aus dem Reifen W entfernt. Ist das neue Messer 31 montiert und ggf. der abgebrochene Messerteil aus dem Reifen W entfernt, wird die Schnitttiefe wieder eingestellt und die Schneidvorrichtung 20 wird wieder in Tiefenrichtung y mit dem Messer 31 bis kurz vor den Reifen W gefahren. Dann werden beide Zustimmtaster 8L, 8R gedrückt (der Reifen W läuft wieder los) und das Messer 31 wieder in die betreffende Rille R₁, R₂, R₃, R₄, R₅ eingetaucht. Anschließend wird der durch den Messerbruch unterbrochene Schneidvorgang zu Ende geführt.

Bei einem Not-Aus (z. B. bei einem Stromausfall, Systemfehler, Unfall etc.) kann die Maschine 1 vorteilhafterweise derart programmiert sein, dass die aktuelle Position gelöscht und der Automatikbetrieb nach einer erneuten Inbetriebnahme entsprechend neu gestartet werden muss.

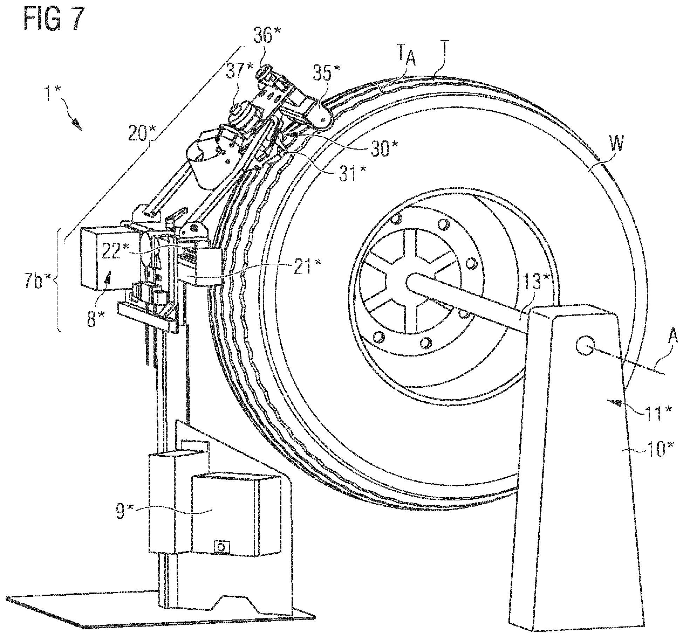

Nun wird anhand der schematischen Darstellung in Figur 7 noch ein stark vereinfachtes Ausführungsbeispiel einer erfindungsgemäßen Reifennachschneidemaschine 1* bzw. Maschine 1* beschrieben.

Sofern nichts Anderslautendes erwähnt, kann dieses grundsätzlich wie das zuvor beschriebene komplexere Ausführungsbeispiel aufgebaut sein.

Die Maschine 1* besteht hier zum einen aus einer im Wesentlichen "kranartigen" Schneidvorrichtung 20* sowie zum anderen aus einer davon getrennten Reifenaufnahme 10*. Die Reifenaufnahme 10* und die Schneidvorrichtung 20* können allerdings beide fest am Boden, auf einer gemeinsamen Bodenplatte oder auf einer zueinander beweglichen Schiene befestigt sein (nicht dargestellt).

Die Reifenaufnahme 10* besitzt eine einfache "Säule" (damit der Reifen in einer geeigneten Bearbeitungshöhe mit zumindest etwas Luft zum Boden gedreht werden kann) mit einer darin gelagerten Antriebswelle 13* sowie Antriebsmitteln 11* zum Antreiben der Antriebswelle 13*, auf welcher der Reifen W verspannt und gehalten wird. Die Halterung mit der Antriebswelle 13* ist hier nur grob schematisch gezeigt.

Die Schneidvorrichtung 20* umfasst ebenfalls eine Art "Säule", an welcher in einem bodennahen Abschnitt eine Steuervorrichtung 9* sowie die entsprechende Hardware bzw. Elektronik verbaut sind. Am oberen Ende der Säule ist eine sich in horizontaler Richtung erstreckende längliche Traversenschiene 21* angebracht. Auf der reifenabgewandten Seite der Traversenschiene 21* ist das Bedienfeld 7b* mit Steuer- und Bedienelementen 8* der Maschine 1 angeordnet. Auf dieser Traversenschiene 21* ist auf einem Schlitten 22 von dem schräg ein Ausleger in Richtung Reifenaufnahme 10* bzw. Reifen W abgeht, ein Schneidkopf 30* der Schneidvorrichtung 20* montiert.

Neben dem Schneidkopf 30* mit einem Messer 31* befindet sich am reifennahen Ende des Auslegers auch eine Abstützvorrichtung 35*. Das Messer 31* des Schneidkopfes 30* ist identisch zu dem oben beschriebenen Messer 31 und ist mittels eines mit einem einfachen Rädchen verstellbaren Schnitttiefenreglers 36* in einem Überstand relativ zur Abstützvorrichtung 35* einstellbar. Gesondert dazu ist ein Winkelbereich des Messers 31* über (z. B. mechanische) Anschläge 37* in einem Schwenkantrieb mit Schwenkflügeln des Schneidkopfes 30* händisch einstellbar. Die Abstützvorrichtung 35* ist hier als eine längliche Rolle 35* ausgebildet, welche unmittelbar in Umlaufrichtung des Reifens W vor dem Messer 31* des Schneidkopfes 30* über die Laufflächenoberfläche T_{A} der Lauffläche T des Reifens W hinwegrollt und damit das Messer 31* entsprechend abstützt, so dass das Messer 31* beim Nachschneidevorgang in einer eingestellten Tiefe durch die Lauffläche T geführt wird.

Alternativ kann die Abstützvorrichtung aber auch über eine oder zwei Abstützrollen verfügen, wie sie bei dem oben beschriebenen Ausführungsbeispiel verbaut sind, d. h. Abstützrollen, die auf Höhe des Messers seitlich rechts und links des Messers das Messer gegen die Lauffläche des Reifens abstützen.

Auch mit dieser Konstruktion lässt sich das Profil P eines Reifens W bereits nachschneiden, wenn gleich hiermit keine ideale Ausrichtung des Messers 31 zum Reifen W erreicht wird.

Insgesamt sorgt die erfindungsgemäße Konstruktion also dafür, dass wieder mehr Reifen nachgeschnitten werden, was die jährlich anfallende Zahl an Altreifen reduzieren würde. Die Erfindung kann damit einen Beitrag hin zu einer nachhaltigeren Reifenindustrie machen.

Davon abgesehen spart die erfindungsgemäße Konstruktion auch Zeit beim Nachschneiden ein, da sie gegenüber eines Nachschneidens per Hand erheblich schneller ist. Sie schont den Arbeiter, da der überwiegende Teil der körperlichen Arbeit von der Maschine übernommen wird und erzielt in den allermeisten Fällen saubere Ergebnisse, da die Schnittqualität der Maschine während des Nachschneidens gleichbleibt. Durch die gleichmäßig hohe Schnittqualität lassen sich - im Gegensatz zum Nachschneiden per Hand, bei dem oft mehrmals der Schnitt unterbrochen bzw. neu angesetzt werden muss - die Schnittreste zudem im Normalfall in einem Stück aus dem Reifen entfernen, z. B. durch Herausziehen. Zudem lassen sich Nachschneidtiefen von bis zu 13 mm Tiefe erzielen, wohingegen per Hand nur Tiefen bis zu maximal 10 mm möglich sind. Im Vergleich zu einem Nachschneiden mit einer Schneidpistole per Hand ist zudem das Messereinstellen wesentlich vereinfacht und ein Messerwechsel einfacher und schneller möglich, was wiederum Prozesszeit einspart. Die Produktivität ist zudem nicht von der Ausdauer bzw. Kraft eines Mitarbeiters abhängig, so dass ein Dauerbetrieb möglich wäre. Eine Kosten-Nutzen-Analyse der Maschine hat ergeben, dass bei normaler Nutzung mit einer Amortisation der (im Vergleich zu einer Schneidpistole natürlich deutlich höheren) Anschaffungskosten nach spätestens ca. drei Jahren zu rechnen ist.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So sind beispielsweise auch andere Reifen wie PKW-Reifen, Traktorreifen, Busreifen etc. im Rahmen der Erfindung umfasst, sofern sie nachschneidbar ausgebildet sind und die gesetzlichen Bestimmungen in dem betreffenden Land es gesetzlich zulassen, dass deren Profil nachgeschnitten werden darf. Ferner sind auch Reifen mit einem Profil mit mehr oder weniger als fünf Rillen, also z. B. ein, zwei, drei oder sechs Rillen, mit der Erfindung nachschneidbar. Grundsätzlich ist es denkbar, dass die Reifennachschneidemaschine vollautomatisiert realisiert wird, d. h. sämtliche Arbeitsschritte bis auf eine Überwachung der Maschine weitestgehend automatisiert ablaufen. Theoretisch könnte man die Reifennachschneidemaschine, um den Bediener der Reifennachschneidemaschine weiter zu entlasten, vollautomatisch mit einem Roboterarm ausgestalten. Die Reifennachschneidemaschine könnte dazu dann aus Sicherheitsgründen entsprechend eingezäunt bzw. mit einem geeigneten Gehäuse versehen werden. Eine Vollautomatisierung der Reifennachschneidemaschine könnte sich beispielswiese dann anbieten, wenn sich die Kosten für einen Roboterarm in Zukunft vergünstigen und z. B. die Personalkosten verteuern. Weiterhin schließt die Verwendung der unbestimmten Artikel "ein" bzw. "eine" nicht aus, dass die betreffenden Merkmale auch mehrfach vorhanden sein können.

### Bezugszeichenliste

1, 1* Reifennachschneidemaschine / Maschine
2 Gehäuse / Aufbau
3 Bodenplatte
4 Staplerschuhe
5 Füße, individuell höhenverstellbar
6 Öse / Schwerlastöse für den Transport
7 Traverse
7b, 7b* Bedienfeld
8, 8* Steuerelemente / Bedienelemente
8L, 8R Zustimmtaster
8J Joystick
9, 9* Steuervorrichtung
9a Rechnereinheit
10, 10* Reifenaufnahme
11, 11* Antriebsmittel
12 Zuführschlitten der Reifenaufnahme
13, 13* Antriebswelle der Reifenaufnahme
14 Hubmittel / Scherenhubtisch der Reifenaufnahme
15 Reifenfeststellschraube / Reifenschnellspannmutter der Reifenaufnahme
16 Rampe
17 Scharnier
20, 20* Schneidvorrichtung
20g Gleitführungen
20z Zahnrad
21, 21* Traversenschiene
21g Gleitstangen
21z Zahnstange
22, 22* Schlitten für die Schneidvorrichtung
23 Andruckmittel / Zugmittel der Maschine
30, 30* Schneidkopf
30A Schneidkopfachse
31, 31* Messer
32 Schenkel
32i Schenkelinnenseiten
32e Eintauchstellen der Schenkel des Messers in den Reifen
33 Messerklemme
34 Stromanschluss
35 Abstützvorrichtung / Abstützwalze
35* Abstützvorrichtung
36 Schnitttiefeneinsteller
36' Stellrädchen des Schnitttiefeneinstellers
36A Stellungsanzeiger, digital
36R Schnitttiefenrichtung des Schnitttiefeneinstellers
36* Schnitttiefeneinsteller
37 Schnittrichtungs- / Schnittwinkeleinsteller
37* Anschläge
37K Keilriemen des Schnitttiefeneinstellers
37M Schrittmotor des Schnitttiefeneinstellers
38 äußere Hohlwelle
38F Passfederelement
39 innere Hohlwelle
39B Messerblock
40 Schraubenfeder
41 Gewindestange
42 Kulissenstein
43 Rillenkugellager
44 Druckschraube
45 Kühlvorrichtung
46 Kühlkanal der Kühlvorrichtung
47 Luftauslässe der Kühlvorrichtung
47g Gasstrom / Luftstrom
50 Federelemente
x₁, x₃, x₅ Positionen
x_{A} Abstand zwischen zwei Rillen
x_{R} Rillenbreite einer Rille
x Breitenrichtung / Richtung parallel zur Rotationsachse des Reifens
y Tiefenrichtung / Axialrichtung des Schneidkopfs
z Höhenrichtung der Maschine
xₘₐₓ, yₘₐₓ, zₘₐₓ räumliche Abmessungen / Außenabmessungen der Maschine
A Antriebsachse / Rotationsachse des Reifens
P Profil
R₁, R₂, R₃, R₄, R₅ Rille
SA Schwenkachse
S₀ Neutralstellung des Schneidkopfes
S₁, S₅ Schwenkstellungen
T Lauffläche
T_{A} Laufflächenoberfläche
W Reifen / LKW-Reifen

## Patentansprüche

1. Reifennachschneidemaschine (1) zum Nachschneiden eines Profils (P) mit zumindest einer Rille (R₁, R₂, R₃, R₄, R₅) in einer Lauffläche (T) eines Reifens (W), vorzugsweise mit
- einer Reifenaufnahme (10) zum Halten des Reifens (W) auf einer Antriebsachse (A), welche koaxial zu einer Rotationsachse (A) des Reifens (W) verläuft,
- Antriebsmitteln (11), um einen von der Reifenaufnahme (10) aufgenommenen Reifen (W) während eines Schneidvorgangs um die Rotationsachse (A) zu rotieren,
- einer Steuervorrichtung (9), welche die Reifennachschneidemaschine (1) so steuert, dass das Profil (P) des Reifens (W) entlang der Rille (R₁, R₂, R₃, R₄, R₅) nachgeschnitten wird,
- einer Schneidvorrichtung (10), welche einen Schneidkopf (30) mit einem Messer (31) aufweist, und
einer Kühlvorrichtung (45) mit zumindest einem Luftauslass (47), um das Messer (31) der Schneidvorrichtung (10) im Schneidbetrieb mittels eines Gasstroms (47g), insbesondere eines Luftstroms (47g), zu kühlen.

2. Reifennachschneidemaschine nach Anspruch 1, wobei das Messer (31) eine Messerklinge mit zwei Schenkeln (32) aufweist und die Kühlvorrichtung (45) zumindest zwei Luftauslässe (47) aufweist.

3. Reifennachschneidemaschine nach Anspruch 2, wobei die zumindest zwei Luftauslässe (47) so ausgebildet und ausgerichtet sind,
um das Messer (31) jeweils zielgerichtet an einer Eintauchstelle (32e) eines jeden Schenkels (32) des Messers (31) an einem aus dem Reifen (W) herausstehenden Messerteil mit einem jeweiligen Gasstrom (47g), insbesondere Luftstrom (47g), zu kühlen,
und/oder
dass der daraus hinausströmende Gasstrom (47g) bzw. Luftstrom (47g) auf die beiden Schenkelinnenseiten (32i) der Schenkel (32) des Messers (31) gerichtet ist.

4. Reifennachschneidemaschine nach Anspruch 2 oder 3, wobei sich die Luftauslässe (47) eines Kühlkanals (46) der Kühlvorrichtung (45) zwischen den Schenkeln (32) des Messers (31) im inneren Teil einer Messerklemme (33) des Messers (31) sowie einem Messerblock (39B) des Messers (31) befinden.

5. Reifennachschneidemaschine (1, 1*) nach einem der vorstehenden Ansprüche, mit einer Abstützvorrichtung (35, 35*), um den Schneidkopf (30, 30*) während eines Schneidvorgangs an der Lauffläche (T) des von der Reifenaufnahme (10, 10*) aufgenommenen Reifens (W) abzustützen, so dass sich das Messer (31, 31*) in der Rille (R₁, R₂, R₃, R₄, R₅) der Lauffläche (T) befindet.

6. Reifennachschneidemaschine nach einem der vorstehenden Ansprüche, wobei der Schneidkopf (30, 30*) um eine Schwenkachse (SA) in der Schneidvorrichtung (20, 20*) schwenkbar gelagert ist und wobei vorzugsweise das Messer (31, 31*) um eine Schneidkopfachse (30A) im Schneidkopf (30, 30*) schwenkbar gelagert ist.

7. Reifennachschneidemaschine nach einem der vorstehenden Ansprüche, wobei die Schneidvorrichtung (20, 20*) derart aufgebaut und angeordnet ist, dass die Schwenkachse (SA) des Schneidkopfes (30, 30*) im bestimmungsgemäßen Betrieb während eines Nachschneidevorgangs eines Profils (P) eines Reifens (W) tangential, vertikal in der Tangentialebene an der Laufflächenoberfläche (T_{A}) am Reifen (W) anliegt und dabei vorzugsweise die Schneidvorrichtung (20, 20*) aus einer horizontalen, im Wesentlichen radialen Richtung (y) seitlich gegen den Reifen (W) gedrückt oder gezogen wird.

8. Reifennachschneidemaschine nach einem der vorstehenden Ansprüche 5 bis 7, wobei die Abstützvorrichtung (35, 35*), bevorzugt jeweils seitlich neben dem Messer (31, 31*), zumindest eine Abstützwalze (35, 35*) umfasst, welche vorzugsweise jeweils schmaler ist als ein Abstand (x_{A}) zwischen zwei nachzuschneidenden Rillen (R₁, R₂, R₃, R₄, R₅) der Lauffläche (T) des Reifens (W) aber breiter als ein Längsrillenmuster und/oder eine Rillenbreite (x_{R}) der betreffenden Rille (R₁, R₂, R₃, R₄, R₅) des Profils (P).

9. Reifennachschneidemaschine nach einem der vorstehenden Ansprüche 5 bis 8, wobei die Schneidvorrichtung (20) eine Federanordnung mit zumindest einem Federelement (50) umfasst, um zumindest einen Teil des Schneidkopfs (30) und/oder der Abstützvorrichtung (35) federnd in eine Neutralstellung (S₀) zurückzustellen, wenn keine externe Kraft auf die Abstützvorrichtung (35) wirkt.

10. Reifennachschneidemaschine nach einem der vorstehenden Ansprüche, wobei der Schneidkopf (30) und/oder das Messer (31) innerhalb des Schneidkopfs (30), in einer Schnitttiefenrichtung (36R) axial federnd gelagert ist,
und/oder
wobei der Schneidkopf (30) einen axial verstellbaren Schnitttiefeneinsteller (36) und/oder einen Schnittwinkeleinsteller (37) für das Messer (31) umfasst.

11. Verfahren zum Nachschneiden eines Profils (P) mit zumindest einer Rille (R₁, R₂, R₃, R₄, R₅) in einer Lauffläche (T) eines Reifens (W) mittels einer Reifennachschneidemaschine (1, 1*), insbesondere nach einem der vorstehenden Ansprüche, umfassend folgende Schritte:
a) Anordnen des Reifens (W) in einer Reifenaufnahme (10, 10*) der Reifennachschneidemaschine (1 ,1*) zum Halten des Reifens (W) auf einer Antriebsachse (A), welche koaxial zu einer Rotationsachse (A) des Reifens (W) verläuft,
b) optional Arretieren des Reifens (W) an einer Antriebswelle (13, 13*) der Reifenaufnahme (10, 10*) mittels einer Reifenfeststellschraube (15),
c) optional Positionieren einer Schneidvorrichtung (20, 20*) der Reifennachschneidemaschine (1, 1*), insbesondere eines Messers (31, 31*) eines Schneidkopfs (30, 30*) der Schneidvorrichtung (20, 20*), passend zu einer ersten ausgewählten Rille (R₁, R₂, R₃, R₄, R₅) des Reifens (W),
d) Antreiben des in der Reifenaufnahme (10, 10*) aufgenommenen Reifens (W) um seine Rotationsachse (A) mithilfe von Antriebsmitteln (11) der Reifenaufnahme (10, 10*), wobei eine Steuervorrichtung (9, 9*) der Reifennachschneidemaschine (1, 1*) diese derart steuert, dass die gerade ausgewählte Rille (R₁, R₂, R₃, R₄, R₅) des Profils (P) des Reifens (W) mittels eines Messers (31, 31*) einer Schneidvorrichtung (20, 20*) der Reifennachschneidemaschine (1, 1*) nachgeschnitten wird,
**dadurch gekennzeichnet,**
**dass** das Messer (31) der Schneidvorrichtung (10) im Schneidbetrieb mit einer Kühlvorrichtung (45) mit zumindest einem Luftauslass (47) mittels eines Gasstroms (47g), insbesondere eines Luftstroms (47g), gekühlt wird.

12. Verfahren nach Anspruch 11, wobei das Messer (31) beim Schneiden nur zum Teil in die Lauffläche (T) eintaucht und ein aus dem Reifen (W) herausstehender Messerteil mittels des Gasstroms (47g), insbesondere des Luftstroms (47g), beaufschlagt wird.

13. Verfahren nach Anspruch 12, wobei das Messer (31, 31*) während des Schneidens mit einem Strom von 100 bis 200 A bei einer Spannung von 2 bis 4 V beaufschlagt wird.

14. Verfahren nach einem der vorstehenden Ansprüche 11 bis 13, wobei im aktivierten Zustand der Kühlvorrichtung (45), der Gasstrom (47g), insbesondere Luftstrom (47g), auf die Schenkelinnenseiten (32i) des Messers (31) an die Eintauchstellen (32e) der Schenkel (32) des Messers (31) in den Reifen (W) strömt, so dass das Messer (31), insbesondere der aus dem Reifen (W) herausstehende Messerteil des Messers (31), konstant auf einer gewünschten Temperatur gehalten wird.

15. Verfahren nach einem der vorstehenden Ansprüche 11 bis 14, wobei der Schneidkopf (30, 30*) mittels einer Abstützvorrichtung (35, 35*) gegen den Reifen (W) abgestützt wird, so dass sich das Messer (31, 31*) des Schneidkopfes (30, 30*) während eines Schneidvorgangs in der Rille (R₁, R₂, R₃, R₄, R₅) in der Lauffläche (T) des von der Reifenaufnahme (10, 10*) aufgenommenen Reifens (W) befindet.
